(19) Europäisches Patentamt
European Patent Office
Office européen des brevets

(11) **EP 3 585 862 B1**

(12) **EUROPEAN PATENT SPECIFICATION**

(45) Date of publication and mention
of the grant of the patent:
**19.03.2025 Bulletin 2025/12**

(51) International Patent Classification (IPC):
***C10G 3/00*** *(2006.01)*     ***C10L 1/08*** *(2006.01)*
***C10L 1/19*** *(2006.01)*     ***C10L 1/02*** *(2006.01)*

(21) Application number: **19740804.0**

(22) Date of filing: **16.01.2019**

(52) Cooperative Patent Classification (CPC):
**C10L 1/026; C10G 3/50;** C10G 2300/1014;
C10G 2300/1018; C10G 2300/202; C10G 2300/307;
C10G 2300/308; C10G 2400/04; Y02E 50/10;
Y02P 30/20

(86) International application number:
**PCT/US2019/013864**

(87) International publication number:
**WO 2019/143732 (25.07.2019 Gazette 2019/30)**

(54) **METHOD FOR BLENDED FUEL COMPOSITIONS WITH IMPROVED EMISSIONS PROFILES**

VERFAHREN FUR GEMISCHTE BRENNSTOFFZUSAMMENSETZUNGEN MIT VERBESSERTEN EMISSIONSPROFILEN

PROCEDE POUR COMPOSITIONS DE CARBURANT MÉLANGÉS PRÉSENTANT DES PROFILS D'ÉMISSIONS AMÉLIORÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.01.2018 US 201862618454 P**

(43) Date of publication of application:
**01.01.2020 Bulletin 2020/01**

(73) Proprietor: **REG Synthetic Fuels, LLC Ames IA 50010 (US)**

(72) Inventors:
• **SLADE, David**
**Ames, Iowa 50010 (US)**
• **ABHARI, Ramin**
**Bixby, Oklahoma 74008 (US)**
• **HAVERLY, Martin**
**Ames, Iowa 50010 (US)**
• **BOWEN, Eric**
**Larkspur, California 94939 (US)**

(74) Representative: **Harrison IP Limited Mereside, Alderley Park Congleton Road Nether Alderley Macclesfield, Cheshire SK10 4TG (GB)**

(56) References cited:
| | |
|---|---|
| EP-A1- 3 239 277 | US-A1- 2005 210 739 |
| US-A1- 2005 210 739 | US-A1- 2009 145 392 |
| US-A1- 2009 145 392 | US-A1- 2011 232 169 |
| US-A1- 2012 283 491 | US-A1- 2015 068 109 |
| US-A1- 2015 184 101 | US-A1- 2015 184 101 |
| US-A1- 2016 145 536 | US-A1- 2017 327 757 |
| US-A1- 2017 327 757 | |

**Description**

FIELD

The present technology relates generally to methods of generating blended compositions that exhibit surprising and unexpected emissions profiles, including a pronounced synergistic effect, while avoiding field performance problems.

US2017/327757, US2009/145392, US2005/210739 and EP3239277 all disclose methods of producing a blended fuel.

SUMMARY

The method of the invention is defined in the appended claims.

BRIEF DESCRIPTION OF THE DRAWINGS

FIG. 1 provides a ternary blend diagram of exemplary blended fuel compositions of the present technology.

FIG. 2 provides NOx and PM emissions measured on a brake specific basis according to the EPA Federal Test Procedure detailed in 40 CFR, Part 86, Subpart N for blended fuel compositions including a biodiesel and a synthetic paraffinic diesel, according to the working examples.

FIGs. 3A-B provide the PM (FIG. 3A) and NOx (FIG. 3B) emissions measured on a brake specific basis according to the EPA Federal Test Procedure detailed in 40 CFR, Part 86, Subpart N for blended fuel compositions including a biodiesel, a synthetic paraffinic diesel, and/or a reference ULSD petroleum fuel, according to the working examples.

FIG. 4 provides carbon monoxide emissions for blended fuel compositions including a biodiesel and a synthetic paraffinic diesel, according to the working examples, wherein the error bars represent the standard deviation of triplicates.

FIG. 5 provides relative change in elastomer volume for elastomers exposed to blends of biodiesel and synthetic paraffinic diesel based on a petroleum diesel reference, according to the working examples.

FIG. 6 provides the impact of total aromatics on nitrile butadiene rubber (NBR) swell compared to that of biodiesel, according to the working examples.

FIG. 7 provides the impact of polynuclear aromatics on NBR swell compared to that of biodiesel, according to the working examples.

FIGs. 8A-B provides the measured freezing points (FIG. 8A) and cold filter plugging points (FIG. 8B) of exemplary blended fuel compositions of biodiesel and synthetic paraffinic diesel in comparison to linear values, according to the working examples.

FIG. 9 provides CSFBT Test scores for three biodiesel samples as compared to a petroleum ultra-low sulfur diesel reference, according to the working examples.

FIGs. 10A-C provide CSFBT Test scores for three biodiesel samples each blended in varying amounts with synthetic paraffinic diesel, according to the working examples.

FIG. 11 provides averaged results for the Cold Soak Filtration test and the 20/80 CSFBT Test for 805 blends of biodiesel and a synthetic paraffinic diesel sample, according to the working examples.

DETAILED DESCRIPTION

Various embodiments are described hereinafter. It should be noted that the specific embodiments are not intended as an exhaustive description or as a limitation to the broader aspects discussed herein. One aspect described in conjunction with a particular embodiment is not necessarily limited to that embodiment and can be practiced with any other embodiment(s).

As used herein, "about" will mean up to plus or minus 5% of the particular term. For example, "about 10 vol.%" would mean "9.5 vol.% to 10.5 vol.%."

The use of the terms "a" and "an" and "the" and similar referents in the context of describing the elements (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the embodiments and does not pose a limitation on the scope of the claims unless otherwise stated. No language in the specification should be construed as indicating any non-claimed element as essential.

As used herein, "alkyl" groups include straight chain and branched alkyl groups. Examples of straight chain alkyl groups include methyl, ethyl, n-propyl, n-butyl, n-pentyl, n-hexyl, n-heptyl, and n-octyl groups. Examples of branched alkyl groups include, but are not limited to, isopropyl, sec-butyl, t-butyl, neopentyl, and isopentyl groups. It will be understood that the phrase "$C_x$-$C_y$ alkyl," such as $C_1$-$C_4$ alkyl, means an alkyl group with a carbon number falling in the range from x to y.

The term "aromatics" as used herein is synonymous with "aromates" and means both cyclic aromatic hydrocarbons that do not contain heteroatoms as well as heterocyclic aromatic compounds. The term includes monocyclic, bicyclic and polycyclic ring systems (collectively, such bicyclic and polycyclic ring systems are referred to herein as "polycyclic aromatics" or "polycyclic aromates"). The term also includes aromatic species with alkyl groups and cycloalkyl groups. Thus, aromatics include, but are not limited to, benzene, azulene, heptalene, phenylbenzene, indacene, fluorene, phenanthrene, triphenylene, pyrene, naphthacene, chrysene, anthracene, indene, indane, pentalene, and naphthalene, as well as alkyl and cycloalkyl substituted variants of these compounds. In some embodiments, aromatic species contains 6-14 carbons, and in others from 6 to 12 or even 6-10 carbon atoms in the ring portions of the groups. The phrase includes groups containing fused rings, such as fused aromatic-aliphatic ring systems (*e.g.*, indane, tetrahydronaphthene, and the like).

"Oxygenates" as used herein means carbon-containing compounds containing at least one covalent bond to oxygen. Examples of functional groups encompassed by the term include, but are not limited to, carboxylic acids, carboxylates, acid anhydrides, aldehydes, esters, ethers, ketones, and alcohols, as well as heteroatom esters and anhydrides such as phosphate esters and phosphate anhydrides. Oxygenates may also be oxygen containing variants of aromatics, cycloparaffins, and paraffins as described herein.

The term "paraffins" as used herein means non-cyclic, branched or unbranched alkanes. An unbranched paraffin is an n-paraffin; a branched paraffin is an isoparaffin. "Cycloparaffins" are cyclic, branched or unbranched alkanes.

The term "paraffinic" as used herein means both paraffins and cycloparaffins as defined above as well as predominantly hydrocarbon chains possessing regions that are alkane, either branched or unbranched, with mono- or di-unsaturation (*i.e.,* one or two double bonds).

Hydroprocessing as used herein describes the various types of catalytic reactions that occur in the presence of hydrogen without limitation. Examples of the most common hydroprocessing reactions include, but are not limited to, hydrogenation, hydrodesulfurization (HDS), hydrodenitrogenation (HDN), hydrotreating (HT), hydrocracking (HC), aromatic saturation or hydrodearomatization (HDA), hydrodeoxygenation (HDO), decarboxylation (DCO), hydroisomerization (HI), hydrodewaxing (HDW), hydrodemetallization (HDM), decarbonylation, methanation, and reforming. Depending upon the type of catalyst, reactor configuration, reactor conditions, and feedstock composition, multiple reactions can take place that range from purely thermal (*i.e.,* do not require catalyst) to catalytic. In the case of describing the main function of a particular hydroprocessing unit, for example an HDO reaction system, it is understood that the HDO reaction is merely one of the predominant reactions that are taking place and that other reactions may also take place.

Decarboxylation (DCO) is understood to mean hydroprocessing of an organic molecule such that a carboxyl group is removed from the organic molecule to produce $CO_2$, as well as decarbonylation which results in the formation of CO.

Pyrolysis is understood to mean thermochemical decomposition of carbonaceous material with little to no diatomic oxygen or diatomic hydrogen present during the thermochemical reaction. The optional use of a catalyst in pyrolysis is typically referred to as catalytic cracking, which is encompassed by the term as pyrolysis, and is not be confused with hydrocracking.

Hydrotreating (HT) involves the removal of elements from groups 3, 5, 6, and/or 7 of the Periodic Table from organic compounds. Hydrotreating may also include hydrodemetallization (HDM) reactions. Hydrotreating thus involves removal of heteroatoms such as oxygen, nitrogen, sulfur, and combinations of any two more thereof through hydroprocessing. For example, hydrodeoxygenation (HDO) is understood to mean removal of oxygen by a catalytic hydroprocessing reaction to produce water as a by-product; similarly, hydrodesulfurization (HDS) and hydrodenitrogenation (HDN) describe the respective removal of the indicated elements through hydroprocessing.

Hydrogenation involves the addition of hydrogen to an organic molecule without breaking the molecule into subunits. Addition of hydrogen to a carbon-carbon or carbon-oxygen double bond to produce single bonds are two nonlimiting examples of hydrogenation. Partial hydrogenation and selective hydrogenation are terms used to refer to hydrogenation reactions that result in partial saturation of an unsaturated feedstock. For example, vegetable oils with a high percentage of polyunsaturated fatty acids (*e.g.,* linoleic acid) may undergo partial hydrogenation to provide a hydroprocessed product wherein the polyunsaturated fatty acids are converted to mono-unsaturated fatty acids (*e.g.,* oleic acid) without increasing the percentage of undesired saturated fatty acids (*e.g.,* stearic acid). While hydrogenation is distinct from hydrotreatment, hydroisomerization, and hydrocracking, hydrogenation may occur amidst these other reactions.

Hydrocracking (HC) is understood to mean the breaking of a molecule's carbon-carbon bond to form at least two molecules in the presence of hydrogen. Such reactions typically undergo subsequent hydrogenation of the resulting double bond.

Hydroisomerization (HI) is defined as the skeletal rearrangement of carbon-carbon bonds in the presence of hydrogen to form an isomer. Hydrocracking is a competing reaction for most HI catalytic reactions and it is understood that the HC reaction pathway, as a minor reaction, is included in the use of the term HI. Hydrodewaxing (HDW) is a specific form of hydrocracking and hydroisomerization designed to improve the low temperature characteristics of a hydrocarbon fluid.

It will be understood that if a composition is stated to include "$C_x$-$C_y$ hydrocarbons," such as $C_7$-$C_{12}$ n-paraffins, this means the composition includes one or more paraffins with a carbon number falling in the range from x to y.

A "diesel fuel" in general refers to a fuel with boiling point that falls in the range from about 150 °C to about 360 °C (the "diesel boiling range").

A "biodiesel" as used herein refers to fatty acid $C_1$-$C_4$ alkyl esters produced by esterification and/or transesterification reactions between a $C_1$-$C_4$ alkyl alcohol and free fatty acids and/or fatty acid glycerides, such as described in U.S. Pat. Publ. No. 2016/0145536,

A "synthetic paraffinic diesel" as used throughout herein refers to diesel boiling range paraffinic hydrocarbons (1) generated by a process that includes hydrodeoxygenation (HDO) of one or more biorenewable feedstocks to produce a HDO product, optionally followed by hydroisomerization of the HDO product; or (2) a combination of (1) and a fuel generated by a process that includes a Fischer-Tropsch process.

A "petroleum diesel" as used herein refers to diesel fuel produced from crude oil, such as in a crude oil refining facility and includes hydrotreated straight-run diesel, hydrotreated fluidized catalytic cracker light cycle oil, hydrotreated coker light gasoil, hydrocracked FCC heavy cycle oil, and combinations thereof.

It is to be understood that a "volume percent" or "vol.%" of a component in a composition or a volume ratio of different components in a composition is determined at 16°C (60°F) based on the initial volume of each individual component, not the final volume of combined components.

The Present Technology

The higher fuel efficiency of the diesel engine compared to gasoline engine results in significantly lower $CO_2$ emissions per miles traveled. However, from an emissions standpoint, it is the non-$CO_2$ emissions that have presented the challenge with diesel engines/fuels. A particular challenge relates to emissions of nitrogen oxides (NOx) and particulate matter (PM).

Generally, NOx is formed by the high temperature reaction of $N_2$ and $O_2$ in air, whereas PM is formed by incomplete combustion of fuel. While modification of both fuel composition (*e.g.*, in the form of additives such as di-tert-butyl peroxide, 2-ethylhexyl nitrate, other organic peroxides, and/or cetane improvers) and engine operation have been attempted to reduce NOx or PM to some extent, there is a trade-off between the two and a decrease in one is typically accompanied by an increase in the other. This has been referred to in the art as the "diesel dilemma" or the "NOx/PM trade-off."

Another type of undesirable emission that affects both diesel and gasoline fuels is carbon monoxide (CO) and hydrocarbons, both of which are byproducts of incomplete fuel combustion. Although these emissions can be partially addressed by after-treatment systems, such as a diesel particulate filter (DPF) and/or direct oxidation catalyst system, there is a need for diesel fuels that emit lower levels of these components in engines without after-treatment systems and that reduce the load on the after-treatment systems in engines that have them. While a DPF allows equipped engines to reduce tailpipe emissions a majority of the time, the DPF requires periodic regeneration by combusting fuel to burn off the soot/PM it collects - a "non-useful" consumption of fuel. This non-useful fuel consumption can be reduced by reducing the engine-out emissions, such as by in-cylinder reductions of these pollutants via more complete combustion, which provides for improved fuel efficiency due to both the improved combustion on a continuous basis and less frequent or less intensive DPF regenerations. Despite this important benefit, the intractable challenge has been to achieve reduction in PM, CO, and hydrocarbon emissions without simultaneously increasing NOx emissions.

Lower PM emissions for a given NOx emission level has been achieved by reducing sulfur and aromatics in petroleum diesel, where CARB (California Air Resource Board guidelines) and Swedish Diesel are examples. CARB diesel has an aromatics specification of 10 vol.% max (CCR 2282) while Swedish Diesel (1991 Mk1 Diesel Specifications) sets the upper limit of aromatics and sulfur at 5 vol.% and 10 wppm respectively. These diesel attributes are typically met via severe hydrodesulfurization and hydrodearomatization processes at petroleum refineries. However, such low-sulfur/low aromatic fuels have generated issues associated with elastomer compatibility.

Traditionally, nitrile rubber elastomers (the standard gasket material used in legacy fleets) are used in fuel system components because they swell when exposed to typical fuels (commonly regarded as due to the presence of aromatics) and thereby provide a tight seal for fuel system components. However, in low-sulfur/low aromatic petroleum fuels, leakage has been observed; this problem is particularly acute with synthetic paraffinic diesels with undetectable to very low concentrations of aromatics and sulfur, such as those meeting European Standard EN15940 (2016) for diesel fuels which sets the upper limit for sulfur and aromatics as 5 wppm and 1.1 wt% respectively.

Although air emission standards for marine applications are not as stringent as they are for on-road diesel, fuels with better biodegradability and marine eco-toxicity are becoming highly desirable. Biodiesel has excellent biodegradability and is considered an essentially non-toxic fuel.

One of the challenges in developing diesel fuels with good biodegradability is that these have relatively poor thermo-oxidative stability. Low thermo-oxidative stability generally correlates to poor storage stability and higher likelihood of engine deposits. Along with its excellent biodegradability, biodiesel typically exhibits lower oxidative stability than petroleum fuels - a concern for some potential users of renewable fuels. Fuels providing a combination of better biodegradability and lower toxicity than petroleum diesel and better thermo-oxidative stability than biodiesel would be highly valued by multiple markets and regulatory jurisdictions.

In addition, fuels with lower "carbon intensity" are also becoming increasingly desirable in many fuel markets. In general, lower carbon intensity fuels are produced from renewable sources rather than exclusively petroleum sources. An example is biodiesel.

There is therefore a need for diesel fuels that provide a better balance of emission properties and a less significant trade-off between biodegradability and stability while ensuring that the fuel is compatible with vehicles using conventional elastomers and concomitantly ensuring such fuels provide lower carbon intensity than conventional petroleum fuels.

Attempts to provide such a balance have typically focused on blending petroleum diesel with biodiesel, where various studies on the effect of biodiesel content on properties of D2/ULSD/CARB diesel (petroleum) fuels have been published. These generally report an improvement in particulate matter, CO, and HC emissions with increasing levels of biodiesel inclusion, however, this tends to be accompanied by an increase in NOx emissions. Other published studies have looked at additives to reduce NOx emissions in petroleum diesel/biodiesel blends.

Guidance on advantageous two component blends of synthetic paraffinic diesel and biodiesel or on advantageous three component blends of petroleum diesel, biodiesel, and synthetic paraffinic diesel is needed in terms of providing blends with a broad set of performance properties, including emissions (*e.g.*, engine emissions), biodegradability, and cold flow properties, and elastomer compatibility. In fact, commercial producers of synthetic paraffinic fuel production have stated that synthetic paraffinic fuels are incompatible with biodiesel at all but low biodiesel concentrations (*e.g.*, "low biodiesel concentrations" being a volume ratio of biodiesel to synthetic paraffinic diesel of less than about 1:14). For example, the recently published Neste Renewable Diesel Handbook (Neste Corp., Espoo, Finland; May 2016) states, "a maximum 7% of high quality FAME [a biodiesel]... can be mixed with Neste Renewable Diesel... Precipitation risk of FAME's impurities increase if more or low quality FAME is used."

In contrast to this, the present technology provides blended fuel compositions including both biodiesel and synthetic paraffinic diesel that are not only viable but surprisingly and unexpectedly offer advantageous fuel and emission properties. The present technology also provides an unprecedented solution to any precipitation risk.

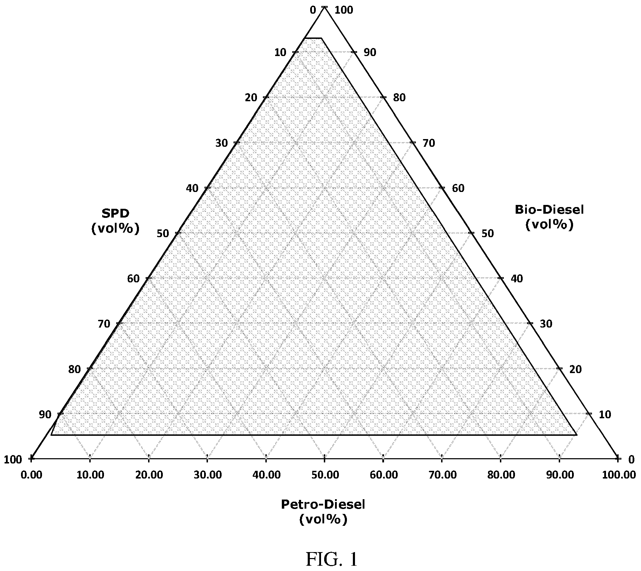

In any embodiment herein, it may be that when the blended fuel composition does not include petroleum diesel (*i.e.,* 0 vol.% petroleum diesel), at least about 9 vol.% biodiesel is included. In any embodiment herein, it may be that when the blended fuel composition does not include petroleum diesel (*i.e.,* 0 vol.% petroleum diesel), at least about 10 vol.% biodiesel is included. Exemplary blended fuel compositions are also illustrated in the ternary blend diagram of FIG. 1. Such compositions surprisingly and unexpectedly offer advantageous fuel and emission properties. As an example, the present disclosure illustrates synergistic advantages provided by such blended fuel compositions. In addition, the blended fuel compositions of the present technology have a surprisingly better balance of other physical and chemical properties such as improved biodegradability with very little change in oxidative stability as well as surprisingly improved elastomer compatibility as compared to synthetic paraffinic diesel alone or ultra-low sulfur diesel (ULSD) alone. The blended fuel composition may be suitable as a diesel fuel, a diesel fuel additive, a diesel fuel blendstock, or a combination of any two or more thereof.

The amount of synthetic paraffinic diesel in the blended fuel composition may be about 5 vol.%, about 6 vol.%, about 7 vol.%, about 8 vol.%, about 9 vol.%, about 10 vol.%, about 11 vol.%, about 12 vol.%, about 13 vol.%, about 14 vol.%, about 15 vol.%, about 16 vol.%, about 17 vol.%, about 18 vol.%, about 19 vol.%, about 20 vol.%, about 21 vol.%, about 22 vol.%, about 23 vol.%, about 24 vol.%, about 25 vol.%, about 26 vol.%, about 27 vol.%, about 28 vol.%, about 29 vol.%, about 30 vol.%, about 31 vol.%, about 32 vol.%, about 33 vol.%, about 34 vol.%, about 35 vol.%, about 36 vol.%, about 37 vol.%, about 38 vol.%, about 39 vol.%, about 40 vol.%, about 41 vol.%, about 42 vol.%, about 43 vol.%, about 44 vol.%, about 45 vol.%, about 46 vol.%, about 47 vol.%, about 48 vol.%, about 49 vol.%, about 50 vol.%, about 52 vol.%, about 54 vol.%, about 56 vol.%, about 58 vol.%, about 60 vol.%, about 62 vol.%, about 64 vol.%, about 66 vol.%, about 68 vol.%, about 70 vol.%, about 72 vol.%, about 74 vol.%, about 76 vol.%, about 78 vol.%, about 80 vol.%, about 85 vol.%, about 90 vol.%, about 95 vol.%, or any range including and/or in between any two of these values. In any embodiment herein, the synthetic paraffinic diesel may exclude a fuel generated by a process that includes a Fischer-Tropsch process. In any embodiment herein, the synthetic paraffinic diesel may have a cetane number of at least about 66 as measured by ASTM D613 (note: while the maximum discernable cetane number provided by ASTM D613 is 74.9, the actual cetane number may be greater than 74.9 and is recognized by a person of ordinary skill in the art). The synthetic paraffinic diesel of any embodiment herein may have a cetane number as measured by ASTM D613 of about 68, about 70, about 72, about 73, about 73.5, about 74, about 74.5, greater than about 74.9, or any range including and/or in between any two of these values.

Hydrotreatment is a process typically conducted in the presence of hydrogen over sulfided forms of hydrogenation metals from Group VIB and Group VIII of the periodic table. Examples of suitable mono-metallic, bi-metallic, and tri-metallic catalysts include Mo, Ni, Co, W, CoMo, NiMo, NiW, NiCoMo. These catalysts may be supported on alumina, or alumina modified with oxides of silicon and/or phosphorus. These catalysts may be purchased in the reduced sulfide form, or more commonly purchased as metal oxides and sulfided during startup. Hydrotreatment may be performed at a temperature falling in the range from about 480 °F (250 °C) to about 750 °F (400 °C) and at a pressure from about 200 psig (13.8 barg) to about 4,000 psig (275 barg). A weighted average bed temperature (WABT) is commonly used in fixed bed, adiabatic reactors to express the "average" temperature of the reactor which accounts for the nonlinear temperature profile between the inlet and outlet of the reactor.

$$WABT = \sum_{i=1}^{N} (WABT_i)(Wc_i)$$

$$WABT_i = \frac{T_i^{in} + 2T_i^{out}}{3}$$

In the equation above, $T_i^{in}$ and $T_i^{out}$ refer to the temperature at the inlet and outlet, respectively, of catalyst bed *i*. As shown, the WABT of a reactor system with *N* different catalyst beds may be calculated using the WABT of each bed (WABT$_i$) and the weight of catalyst in each bed ($Wc_i$). Hydroisomerization is typically conducted in the presence of hydrogen over a bifunctional catalyst at temperatures in the range of about 200 °C to about 500 °C. Bifunctional catalysts are those having a hydrogenation-dehydrogenation activity from a Group VIB and/or Group VIII metal, and acidic activity from an amorphous or crystalline support such as amorphous silica-alumina (ASA), silicon-aluminum-phosphate (SAPO) molecular sieve, or aluminum silicate zeolite (ZSM). Exemplary hydroisomerization catalysts include Pt/Pd-on-ASA, and Pt-on-SAPO-11.

Exemplary biorenewable feedstocks include, but are not limited to, an animal fat, animal oil, microbial oil, plant fat, plant oil, vegetable fat, vegetable oil, grease, or a mixture of any two or more thereof. Plant and/or vegetable oils and/or microbial oils include, but are not limited to, corn oil, distiller's corn oil, babassu oil, carinata oil, soybean oil, canola oil, coconut oil, rapeseed oil, tall oil, tall oil fatty acid, palm oil, palm oil fatty acid distillate, jatropha oil, palm kernel oil, sunflower oil, castor oil, camelina oil, archaeal oil, bacterial oil, fungal oil, protozoal oil, algal oil, seaweed oil, oils from halophiles, and mixtures of any two or more thereof. These may be classified as crude, degummed, refined, and RBD (refined, bleached, and deodorized) grade, depending on level of pretreatment and residual phosphorus and metals content. However, any of these grades may be used in the present technology. Animal fats and/or oils as used above includes, but is not limited to, inedible tallow, edible tallow, technical tallow, floatation tallow, lard, poultry fat, poultry oils, fish fat, fish oils, and mixtures of any two or more thereof. Greases may include, but are not limited to, yellow grease, brown grease, waste vegetable oils, restaurant greases, trap grease from municipalities such as water treatment facilities, and spent oils from industrial packaged food operations, and mixtures of any two or more thereof. Exemplary biorenewable feedstocks additionally include fractions of the above feeds which have been prepared by pyrolysis or thermal cracking. Depending on level of pretreatment, such biorenewable feedstocks may contain between about 1 wppm and about 1,000 wppm phosphorus, and between about 1 wppm and about 2,000 wppm total metals (mainly sodium, potassium, magnesium, calcium, iron, and copper).

Thus, the hydroprocessed biorenewable feedstock of any embodiment herein may include a hydroprocessed product of corn oil, inedible corn oil (also known as distiller's corn oil), babassu oil, carinata oil, soybean oil, canola oil, coconut oil, rapeseed oil, tall oil, tall oil fatty acid, palm oil, palm oil fatty acid distillate, jatropha oil, palm kernel oil, sunflower oil, castor oil, camelina oil, archaeal oil, bacterial oil, fungal oil, protozoal oil, algal oil, seaweed oil, oils from halophiles, rendered fats, inedible tallow, edible tallow, technical tallow, floatation tallow, lard, poultry fat, poultry oils, fish fat, fish oils, frying oils, yellow grease, brown grease, waste vegetable oils, restaurant greases, trap grease from municipalities such as water treatment facilities, and spent oils from industrial packaged food operations, or a mixture of any two or more thereof.

The hydroprocessed biorenewable feedstock may include at least about 80 wt% of two or more different carbon number paraffins that fall within the $C_{11}$ to $C_{18}$ range. The composition may contain paraffins in the amount of about 82 wt%, about 84 wt%, about 86 wt%, about 88 wt%, about 90 wt%, about 92 wt%, about 94 wt%, about 96 wt%, about 98 wt%, about 99 wt%, and any range including and/or in between any two of these values or above any one of these values. The paraffins may include $C_{16}$ and $C_{18}$ paraffins, such as at least about 50% wt% $C_{16}$ and $C_{18}$ paraffins (*i.e.,* the total weight percent combined for $C_{16}$ and $C_{18}$ paraffins), at least about 55% wt% $C_{16}$ and $C_{18}$ paraffins, or at least about 60 wt% $C_{16}$ and Cis paraffins. The hydroprocessed biorenewable feedstock may include at least about 70 wt% even carbon number paraffins. Thus, the hydroprocessed biorenewable feedstock may include even carbon number paraffins in an amount of about 70 wt%, about 71 wt%, about 72 wt%, about 73 wt%, about 74 wt%, about 75 wt%, about 76 wt%, about 78 wt%, about 80 wt%, about 82 wt%, about 84 wt%, about 86 wt%, about 88 wt%, about 90 wt%, about 91 wt%, about 92 wt%, about 93 wt%, about 94 wt%, about 95 wt%, about 96 wt%, about 97 wt%, about 98 wt%, about 99 wt%, about 99.2 wt%, about 99.4 wt%, about 99.5 wt%, about 99.6 wt%, about 99.7 wt%, about 99.8 wt%, about 99.9 wt%, about 99.99 wt%, about 100 wt%, or any range including and in-between any two of these values.

In any embodiment herein, the hydroprocessed biorenewable feedstock may include iso-paraffins (such as from hydroisomerization) in addition to n-paraffins (such as from hydrotreatment of a biorenewable feedstock. Thus, the paraffins in the hydroprocessed biorenewable feestock may include iso-paraffins and n-paraffins. A ratio of iso-paraffins to n-paraffins may be at about 4:1, about 4.5:1, about 5:1, about 5.5:1, about 6:1, about 6.5:1, about 7:1, about 8:1, about 9:1, about 10:1, about 11:1, about 12:1, about 13:1, about 14:1, about 15:1, about 16:1, about 17:1, about 18:1, about 19:1, about 20:1, about 21:1, about 22:1, about 23:1, about 24:1, about 25:1, about 26:1, about 27:1, about 28:1, about 29:1, about 30:1, and ranges including and/or in between any two of these values or above any one of these values. Where the hydroprocessed biorenewable feedstock includes iso-paraffins, it may be that at least 80 wt % of the iso-paraffins in the hydroprocessed biorenewable feedstock are mono-methyl branched paraffins. The mono-methyl branched paraffins may be about 81 wt%, about 82 wt%, about 83 wt%, about 84 wt%, about 85 wt%, about 86 wt%, about 87 wt%, about 88 wt%, about 89 wt%, about 90 wt %, about 91 wt%, about 92 wt%, about 93 wt%, about 94 wt%, about 95 wt%, about 96 wt%, about 97 wt%, about 98 wt%, about 99 wt%, and any range including and/or in between any two of these values or above any one of these values. Of the mono-methyl branched iso-paraffins, less than 30 wt% are terminal branched (*i.e.,* 2-methyl branched), such as less than 20 wt%, less than 15 wt%, less than 10 wt% , or less than 5 wt% of the mono-methyl branched iso-paraffins are terminal branched.

The hydroprocessed biorenewable feedstock typically has about 18 wt% or less of cycloparaffins. The hydroprocessed biorenewable feedstock may have cycloparaffins in the amount of about 18 wt% about 17 wt%, about 16 wt%, about 15 wt%, about 14 wt%, about 13 wt%, about 12 wt%, about 11 wt%, about 10 wt%, about 9 wt%, about 8 wt%, about 7 wt%, about 6 wt%, about 5 wt%, about 4 wt%, about 3 wt%, about 2 wt%, about 1 wt%, about 0.9 wt%, about 0.8 wt%, about 0.7 wt%, about 0.6 wt%, about 0.5 wt%, about 0.4 wt%, about 0.3 wt%, about 0.2 wt%, about 0.1 wt%, or any range including and/or in between any two of these values or below any one of these values.

In any embodiment herein, the hydroprocessed biorenewable feedstock may contains less than about 1.0 wt% aromatics, and may contain from about 1.0 wt% to about 0.001 wt% aromatics. The hydroprocessed biorenewable feedstock may contain aromatics in the amount of about 0.9 wt%, about 0.8 wt%, about 0.7 wt%, about 0.6 wt%, about 0.5 wt%, about 0.4 wt%, about 0.3 wt%, about 0.2 wt%, about 0.1 wt%, about 0.09 wt%, about 0.08 wt%, about 0.07 wt%, about 0.06 wt%, about 0.05 wt%, about 0.04 wt%, about 0.03 wt%, about 0.02 wt%, about 0.01 wt%, about 0.009 wt%, about 0.008 wt%, about 0.007 wt%, about 0.006 wt%, about 0.005 wt%, about 0.004 wt%, about 0.003 wt%, about 0.002 wt%, about 0.001 wt%, and ranges including and between any two of these values or below any one of these values. In some embodiments, the hydroprocessed biorenewable feedstock contains less than about 0.5 wt % total aromatics. In any embodiment herein, the hydroprocessed biorenewable feedstock may contain less than about 0.01 wt% benzene. The hydroprocessed biorenewable feedstock may contain benzene in the amount of about 0.008 wt%, about 0.006 wt%, about 0.004 wt%, about 0.002 wt%, about 0.001 wt%, about 0.0008 wt%, about 0.0006 wt%, about 0.0004 wt%, about 0.0002 wt%, about 0.0001 wt%, about 0.00008 wt%, about 0.00006 wt%, about 0.00004 wt%, about 0.00002 wt%, about 0.00001 wt% and ranges including and between any two of these values or less than any one of these values. Such low values of benzene may be determined through appropriate analytical techniques, including but not limited to two-dimensional gas chromatography of the composition. In any embodiment herein, the hydroprocessed biorenewable feedstock may have less than about 0.00001 wt% of benzene. In any embodiment herein, the hydroprocessed biorenewable feedstock may contain less than about 0.01 wt% polyaromatic hydrocarbons. The hydroprocessed biorenewable feedstock may contain polyaromatic hydrocarbons in the amount of about 0.008 wt%, about 0.006 wt%, about 0.004 wt%, about 0.002 wt%, about 0.001 wt%, about 0.0008 wt%, about 0.0006 wt%, about 0.0004 wt%, about 0.0002 wt%, about 0.0001 wt%, about 0.00008 wt%, about 0.00006 wt%, about 0.00004 wt%, about 0.00002 wt%, about 0.00001 wt% and ranges including and between any two of these values or less than any one of these values. In any embodiment herein, the hydroprocessed biorenewable feedstock may have less than about 0.00001 wt% of benzenepolyaromatic hydrocarbons.

The hydroprocessed biorenewable feedstock of any embodiment herein may have a sulfur content less than about 5 wppm. The hydroprocessed biorenewable feedstock may have a sulfur content of about 4 wppm, about 3 wppm, about 2 wppm, about 1 wppm, about 0.9 wppm, about 0.8 wppm, about 0.7 wppm, about 0.6 wppm, about 0.5 wppm, about 0.4 wppm, about 0.3 wppm, about 0.2 wppm, about 0.1 wppm, and ranges including and between any two of these values or less than any one of these values.

The hydroprocessed biorenewable feedstock of any embodiment herein, prior to inclusion of any diesel additives such as anti-oxidants, may have less than about 0.5 wt% oxygenates calculated as elemental oxygen (*i.e.,* less than about 0.5 wt% elemental oxygen). The hydroprocessed biorenewable feedstock may have oxygenates in the amount of about 0.5 wt%, about 0.4 wt%, about 0.3 wt%, about 0.2 wt%, about 0.1 wt%, about 0.09 wt%, about 0.08 wt%, about 0.07 wt%, about 0.05 wt%, about 0.04 wt%, about 0.03 wt%, about 0.02 wt%, about 0.01 wt%, and ranges including and between any two of these values or below any one of these values. Such low values of elemental oxygen may be detected through appropriate analytical techniques, including but not limited to Neutron Activation Analysis.

The hydroprocessed biorenewable feedstock of any embodiment herein may include one or more added anti-oxidants. Exemplary anti-oxidants include monophenols (*e.g.,* alkylated hindered phenols such as 2,6-di-*tert*-butyl-4-methylphenol or BHT), bisphenol/thiobisphenols (*e.g.,* 2,2'-methylene-bis-(4-methyl-6-*tert*-butyl phenol)), polyphenols (*e.g.,* butylated reaction product of *p*-cresol and dicyclopentadiene), hydroquinones (*e.g.,* 2,5-di-tert-amyl hydroquinone), phosphites (*e.g.,* tris (*p*-nonylphenyl) phosphite), and thioesters (*e.g.,*dilauryl-3,3'-thio-dipropionate). The total amount of anti-oxidants added may be from about 5 wppm to about 900 wppm.

They hydroprocessed biorenewable feedstock typically has a density less than about 0.800 kg/L at a temperature of 60 °F, and may have a density of about 0.790 kg/L, about 0.780 kg/L, about 0.770 kg/L, about 0.760 kg/L, about 0.750 kg/L, about 0.740 kg/L, about 0.730 kg/L, about 0.720 kg/L, about 0.710 kg/L, about 0.700 kg/L, about 0.690 kg/L, about 0.680 kg/L, about 0.670 kg/L, or any range including and/or in between any two of these values or less than any one of these values.

The synthetic paraffinic diesel (*e.g.,* a hydroprocessed biorenewable feedstock) in any embodiment herein may have a high thermal and oxidative stability (*i.e.,* having a total insoluble content of 0.2 mg/100 mL or less according to the ASTM D2274 accelerated oxidative aging method when about 20 wppm antioxidant is added to the synthetic paraffinic diesel), low aquatic toxicity and ecotoxicity (*i.e.,* having an $LC_{50}$ value of 3.5 mg/L or higher where $LC_{50}$ is the concentration at which half a population of the organism dies of ingesting the fluid, and is typically the average of 24 hour, 48 hour, and 72 hour exposure tests on *Daphia magna, Pimephales promelas,* or Rainbow Trout), and a biodegradability greater than about 40% according to ASTM D5864-05. ASTM D2274 and ASTM D5864-05 are each incorporated herein by reference. ASTM D5864-05 measures how much of a material breaks down into $CO_2$ by microorganisms capable of degrading hydrocarbons over a period of 23 days. Organic compounds with low biodegradability (*i.e.,* less than about 40% biodegradability) are said to bioaccumulate. Bioaccumulation tends to magnify the toxic effect of chemicals on the environment.

The amount of biodiesel in the blended fuel composition may be about 5 vol.%, about 6 vol.%, about 7 vol.%, about 8 vol. %, about 9 vol. %, about 10 vol. %, about 11 vol. %, about 12 vol. %, about 13 vol. %, about 14 vol. %, about 15 vol. %, about 16 vol. %, about 17 vol. %, about 18 vol. %, about 19 vol. %, about 20 vol. %, about 21 vol. %, about 22 vol. %, about 23 vol. %, about 24 vol. %, about 25 vol. %, about 26 vol. %, about 27 vol. %, about 28 vol. %, about 29 vol. %, about 30 vol. %, about 31 vol. %, about 32 vol. %, about 33 vol. %, about 34 vol. %, about 35 vol. %, about 36 vol. %, about 37 vol. %, about 38 vol. %, about 39 vol. %, about 40 vol. %, about 41 vol. %, about 42 vol. %, about 43 vol. %, about 44 vol. %, about 45 vol. %, about 46 vol. %, about 47 vol. %, about 48 vol. %, about 49 vol. %, about 50 vol. %, about 52 vol. %, about 54 vol. %, about 56 vol. %, about 58 vol. %, about 60 vol. %, about 62 vol. %, about 64 vol. %, about 66 vol. %, about 68 vol. %, about 70 vol. %, about 72 vol. %, about 74 vol. %, about 76 vol. %, about 78 vol. %, about 80 vol. %, about 82 vol. %, about 84 vol. %, about 86 vol. %, about 88 vol. %, about 90 vol. %, about 95 vol.%, or any range including and/or in between any two of these values. The biodiesel of any embodiment herein may conform to ASTM D6751-15.

The biodiesel may include a fatty acid $C_1$-$C_4$ alkyl ester produced from an animal fat, animal oil, microbial oil, plant fat, plant oil, vegetable fat, vegetable oil, grease, or a mixture of any two or more thereof. For example, the biodiesel may include a fatty acid $C_1$-$C_4$ alkyl ester produced from corn oil, inedible corn oil, babassu oil, carinata oil, soybean oil, canola oil, coconut oil, rapeseed oil, tall oil, tall oil fatty acid, palm oil, palm oil fatty acid distillate, jatropha oil, palm kernel oil, sunflower oil, castor oil, camelina oil, archaeal oil, bacterial oil, fungal oil, protozoal oil, algal oil, seaweed oil, oils from halophiles, rendered fats, inedible tallow, edible tallow, technical tallow, floatation tallow, lard, poultry fat, poultry oils, fish fat, fish oils, frying oils, yellow grease, brown grease, waste vegetable oils, restaurant greases, trap grease from municipalities such as water treatment facilities, and spent oils from industrial packaged food operations, or a mixture of any two or more thereof. In any embodiment herein, the biodiesel may include a fatty acid methyl ester, a fatty acid ethyl ester, a fatty acid propyl ester, a fatty acid butyl ester, or a mixture of any two or more thereof.

The biodiesel may or may not include a cold-filtered biodiesel that is not distilled, such as described in U.S. Pat. No. 9,109,170 and U.S. Pat. No. 8,097,049. Cold-filtered biodiesels include, but are not limited to, filtration with diatomaceous earth, cellulose, bleaching clay, filtration with magnesium sulfate, filtration with silica gel, as well as filtration with other sorbent media. Such filtration is typically conducted at a temperature lower than the temperature at which the biodiesel is stripped of *e.g.,* residual methanol and/or water. Thus, in any embodiment herein, such filtration may occur at a temperature between about 35 °F and about 120 °F, between about 45 °F and about 100 °F, or between about 55 °F and about 85 °F. In any embodiment herein, the biodiesel may include a distilled biodiesel, such as a biodiesel where about 99 wt% to about 70 wt.% of the initial amount of biodiesel that is distilled is recovered as distillate. Such distillation includes, but is not limited to, atmospheric distillation in a trayed or packed column as well as vacuum distillation in a trayed or packed column. For example, the biodiesel may include a biodiesel distilled in a wiped film evaporator at a temperature of about 230 °C and at a pressure of about 4 mbar (a "230 °C distilled biodiesel"). Where the biodiesel includes both a cold-filtered biodiesel and a distilled biodiesel, it may be a volume ratio of cold-filtered biodiesel to distilled biodiesel is about 100:1 to about 1:100; thus, the volume ratio may be about 100:1 about 90:1, about 80:1, about 70:1, about 60:1, about 50:1, about 40:1, about 30:1, about 20:1, about 15:1, about 10:1, about 9:1, about 8:1, about 7:1, about 6:1, about 5:1, about 4:1, about 3:1, about 2:1, about 1:1, about 1:2, about 1:3, about 1:4, about 1:4, about 1:6, about 1:7, about 1:8, about 1:9, about 1:10, about 1:15, about 1:20, about 1:30, about 1:40, about 1:40, about 1:60, about 1:70, about 1:80, about 1:90, about 1:100, or any range including and/or in between any two of these values. Note that °C = (°F - 32) $\times$ 5/9

In any embodiment herein, the biodiesel may include a biodiesel with a Modified Cold Soak Filter Blocking Tendency Test Procedure score ("Modified CSFBT Test Procedure score") of less than about 4.0. The Modified CSFBT Test Procedure score is described *infra.* Thus, the biodiesel may have a Modified CSFBT Test Procedure score of about 3.9, about 3.8, about 3.7, about 3.6, about 3.5, about 3.4, about 3.3, about 3.2, about 3.1, about 3.0, about 2.9, about 2.8, about 2.7, about 2.6, about 2.5, about 2.4, about 2.3, about 2.2, about 2.1, about 2.0, about 1.9, about 1.8, about 1.7, about 1.6, about 1.5, about 1.4, about 1.3, about 1.2, about 1.1, about 1.05, about 1.0, or any range including and/or in between any two of these values. In any embodiment herein, the biodiesel may or may not include an additive that reduces a Modified CSFBT Test Procedure score as compared to the biodiesel without such an additive.

In any embodiment herein, the blended fuel composition may include a volume ratio of synthetic paraffinic diesel (*e.g.,* a hydroprocessed biorenewable feedstock) to biodiesel of about 90:10, about 85:15, about 80:20, about 75:25, about 70:30, about 65:35, about 60:40, about 59:41, about 58:42; about 57:43; about 56:44, about 55:45, about 54:46, about 53:47, about 52:48, about 51:49, about 50:50, about 49:51, about 48:52, about 47:53, about 46:54, about 45:55, about 44:56, about 43:57, about 42:58, about 41:59, about 40:60, about 35:65, about 30:70, about 25:75, about 20:80, about 15:85, about 10:90, or any range including and/or in between any two of these values.

The petroleum diesel may be a hydrotreated straight-run diesel, hydrotreated fluidized catalytic cracker light cycle oil, hydrotreated coker light gasoil, hydrocracked FCC heavy cycle oil, and combinations thereof. The petroleum diesel of any embodiment herein may conform to ASTM D975-16 prior to blending with the biodiesel and the synthetic paraffinic diesel; the petroleum diesel of any embodiment herein may include a blendstock that requires upgrading to achieve conventional diesel quality. The petroleum diesel may exhibit a cetane number from about 30 to about 65. The petroleum diesel may have an aromatics content of about 5 vol.% to about 60 vol.%. Such aromatics may include monocyclic aromatics, polycyclic aromatics, or both. Exemplary polycyclic aromatics include, but are not limited to, diphenyl alkanes (*e.g.*, 1,1-diphenyl ethane) and polynuclear aromatics (PNA) (*e.g.,* 1-methylnaphthalene). Thus, the petroleum diesel may have a polycyclic aromatics content of about 1 vol.% to about 25 vol.%. The petroleum diesel may have an olefin content of about 0 vol.% to about 10 vol.%. The petroleum diesel may have a paraffin content of about 36 vol.% to about 77 vol.%. The petroleum diesel may exhibit a cloud point from about 0 °C to about -60 °C. The petroleum diesel may have a sulfur content of about 20 ppm or less (such as about 20 ppm to about 0.5 ppm). The petroleum diesel may have a nitrogen content of about 0.8 ppm to about 3 ppm. The petroleum diesel may exhibit a kinematic viscosity at 40 °C from about 1.3 cSt to about 4.1 cSt. The petroleum diesel may exhibit a flash point from about 38 °C to about 80 °C.

The blended fuel composition in any embodiment herein may have an oxidative stability according to the ASTM D2274 of less than about 2.5 mg/100 mL, such as from about 0.1 mg/100 mL to about 2.5 mg/100 mL, a low aquatic toxicity and ecotoxicity (*i.e.,* having an $LC_{50}$ value of 3.5 mg/L or higher where $LC_{50}$ is the concentration at which half a population of the organism dies of ingesting the fluid, and is typically the average of 24 hour, 48 hour, and 72 hour exposure tests on *Daphia magna, Pimephales promelas,* or Rainbow Trout), and/or a biodegradability greater than about 40% according to ASTM D5864-05.

The blended fuel composition in any embodiment herein may include one or more added anti-oxidants, such as the exemplary anti-oxidants discussed previously. The total amount of anti-oxidants added may be from about 5 ppm to about 900 ppm (w/v of the blended fuel composition in any embodiment herein).

The blended fuel composition of any embodiment herein may include a cloud point from about 15 °C to about -60 °C, or less. The cloud point of the composition may be about 15 °C, about 10 °C, about 5 °C, about 4 °C, about 3 °C, about 2 °C, about 1 °C, about 0 °C, about -2 °C, about -4 °C, about -6 °C, about -8 °C, about -10 °C, about -12 °C, about - 14 °C, about -16 °C, about -18 °C, about -20 °C, about -22 °C, about -24 °C, about -26 °C, about -28 °C, about -30 °C, about -32 °C, about -34 °C, about -36 °C, about -38 °C, about -40 °C, about -42 °C, about -44 °C, about -46 °C, about -48 °C, about -50 °C, about -52 °C, about -54 °C, about -56 °C, about -58 °C, about -60 °C, or any range including and/or in between any two of these values or less than any one of these values.

The blended fuel composition of any embodiment herein may include a Freezing Point as determined according to ASTM D5972 from about 20 °C to about -60 °C, or less. While Freezing Point according to ASTM D5972 may be considered an unconventional test for diesel fuel, it is a requirement for jet fuel because it provides an estimate of the temperature at which a fuel will first start to form solid particles that could interfere with fuel filter or engine operation. Thus, Freezing Point is a more conservative indication of safe fuel temperature limits than Cloud Point or Cold Filter Plugging Point (CFPP), which therefore makes Freezing Point particularly useful when evaluating non-conventional fuels and fuel blends such as the blended fuel compositions of the present technology. Thus, in any embodiment herein, the blended fuel composition may include a Freezing Point of about 20 °C, about 15 °C, about 10 °C, about 5 °C, about 4 °C, about 3 °C, about 2 °C, about 1 °C, about 0 °C, about -2 °C, about -4 °C, about -6 °C, about -8 °C, about -10 °C, about -12 °C, about -14 °C, about -16 °C, about -18 °C, about -20 °C, about -22 °C, about -24 °C, about -26 °C, about -28 °C, about -30 °C, about -32 °C, about -34 °C, about -36 °C, about -38 °C, about -40 °C, about -42 °C, about -44 °C, about -46 °C, about -48 °C, about -50 °C, about -52 °C, about -54 °C, about -56 °C, about -58 °C, about -60 °C, or any range including and/or in between any two of these values or less than any one of these values.

The method may include combining the synthetic paraffinic diesel and the biodiesel to form an initial blend, and subsequently combining the initial blend with the petroleum diesel to produce the blended fuel composition (when petroleum diesel is included in the blended fuel composition). In an alternative when petroleum diesel is included in the blended fuel composition, the method may include combining the synthetic paraffinic diesel and the petroleum diesel to form an initial blend, and subsequently combining the initial blend with the biodiesel to produce the blended fuel composition. In yet another alternative when petroleum diesel is included in the blended fuel composition, the method may include combining the biodiesel and the petroleum diesel to form an initial blend, and subsequently combining the initial blend with the synthetic paraffinic diesel to produce the blended fuel composition.

The method of producing the blended fuel comprises selecting the components such that the resulting blend is more likely to perform successfully in the field. The testing required for proper selection of the blending components necessary for successful performance of these novel fuels include test methods that are not conventional tests for diesel fuels, which could explain why production of these fuel blends has historically been discouraged. Appropriate non-conventional tests for the blended fuel compositions and methods of the present technology may include a Modified CSFBT Test Procedure and/or a Freezing Point test. A low Modified CSFBT Test Procedure score indicates a biodiesel for which biodiesel-SPD blends can be allowed to reach their Freezing Points with minimal concern for filter-plugging precipitation. The higher the Modified CSFBT Test Procedure score, the greater the potential for blends of that biodiesel with SPD to form filter-plugging precipitates above their Freezing Points, particularly for biodiesel-SPD blends with lower and higher biodiesel contents.

Generally speaking, Cold Soak Filter Blocking Tendency tests involve applying a Filter Blocking Tendency (FBT) test procedure to a sample that has experienced an extended period of cold exposure (a "cold soak") prior to the FBT test procedure. Common FBT test methods include *ASTM D2068: Standard Test Method for Determining Filter Blocking Tendency* and *IP 387: Determination of Filter Blocking Tendency.* The specific Cold Soak Filter Blocking Tendency test method considered under the present technology is a recently established biodiesel test method that was developed by the Canadian General Standards Board (CGSB) to assess biodiesel for cold weather performance in blends with conventional petroleum diesel: CAN/CGSB-3.0 No. 142.0: Cold soak filter blocking tendency of biodiesel (B100), referred to herein as the "CSFBT Test". The CSFBT Test uses a 20 vol% blend of the test biodiesel in an isoparaffinic diesel-surrogate solvent to evaluate the potential of the biodiesel to contribute to filter blocking precipitates after blending with hydrocarbon diesel in field use ("hydrocarbon diesel" refering to diesel fuels comprised primarily of hydrocarbons, such as petroleum diesel and synthetic paraffinic diesel). As such, the CSFBT Test provides direct information about how biodiesel will perform in blends with hydrocarbon diesels. The CSFBT Test testing procedure may be adapted to provide useful information about a test biodiesel in blends with hydrocarbon diesel fuels by replacing the prescribed isoparaffinic diesel-surrogate solvent with a diesel fuel of interest, such as a petroleum diesel or a synthetic paraffinic diesel ("SPD"). As described below, the inventors have discovered that the CSFBT Test procedure may also be performed with different blend levels of biodiesel to give surprisingly useful results.

The conventional test for cold weather performance suitability of a biodiesel is commonly referred to as the Cold Soak Filtration test [ASTM D7501: Test Method for Determination of Fuel Filter Blocking Potential of Biodiesel (B100) Blend Stock by Cold Soak Filtration Test (CSFT)]. This test is included in the current ASTM specification for biodiesel [ASTM D6751-18: Standard Specification for Biodiesel Fuel Blend Stock (B100) for Middle Distillate Fuels] and has been regarded as very useful over the past decade for biodiesel quality assurance. However, there are concerns among some in the industry that the current ASTM biodiesel specification is not adequately stringent to ensure trouble-free operation in the field for blends of biodiesel. The present technology provides a means to addresses this concern directly. Example 9 provides data correlating the cold sediment quantities produced in biodiesel-SPD blends with the Cold Soak Filtration test (ASTM D7501) and the 20/80 CSFBT Test (described herein). Sediment formation (aka precipitation) tendency can be evaluated using a cold precipitation test on blends of biodiesel and SPD. For this cold precipitation test of Example 9, neat biodiesel is added to SPD at 20 vol% and the blended sample is chilled for 16 hours at 1 °C. The sample is then returned to 25 °C and centrifuged in a clear graduated centrifuge tube. Sediment may then be quantified volumetrically using the gradations on the centrifuge tube. These data indicate that the Cold Soak Filtration test does not correlate well with sediment formation in biodiesel-SPD blends, particularly for biodiesels that demonstrate high precipitation tendency. On the other hand, the cold sediment test results correspond much more closely to the results for the CSFBT Test, confirming that the CSFBT Test is generally better able to predict potential filter-plugging precipitation issues in biodiesel-SPD blends than the Cold Soak Filtration test. The present technology provides an effective method for diminishing the likelihood of filter plugging problems that cannot be predicted by the tests provided in the U.S. biodiesel blendstock specification, ASTM D6751 (The European Union biodiesel specification "*EN 14214:2014, Liquid petroleum products - Fatty acid methyl esters (FAME) for use in diesel engines and heating applications - Requirements and test methods,*" which does not include a test to evaluate sediment formation tendency or potential filtration issues, is even less helpful than the ASTM biodiesel specification for predicting precipitation in biodiesel-SPD blends).

Two modifications to the current revision of the standard CGSB CSFBT Test method [*CAN/CGSB-3.0 No. 142.0-2014: Cold soak filter blocking tendency of biodiesel (B100)*] have been applied to provide a "Modified CSFBT Test Procedure" that can effectively evaluate the suitability of a particular biodiesel specifically for successful performance when included in blends with SPD.

The first modification to the CSFBT Test method is a requirement that the suction tube of the apparatus must be configured such that the test sample is drawn from a position within 3 mm of the bottom of the sample container. For example, a Seta Multi Filtration Tester from Stanhope-Seta required the attachment of a length of flexible plastic tubing to the original suction tube to extend the suction point into the appropriate suction zone (i.e. within 3 mm of the bottom of the sample container) for this modification requirement. The tubing had an inner diameter of about 3 mm to match the original suction tube diameter, was about 13 mm long to allow sufficient length to be attached to the original suction tube, and was clamped to the suction tube with a small tubing clamp to ensure a tight seal. This apparatus requirement greatly diminishes the tendency to leave precipitates and/or gelled material in the sample container at the end of the test, which consequently greatly improves the consistency of the test results and allows the collection of actionable information about the suitability of different biodiesels for blending with SPD.

Without this new apparatus requirement (the first modification), the CSFBT Test may be susceptible to providing falsely favorable test results, which are particularly undesirable when blending biodiesel with SPD. Any FBT apparatus that conforms to this suction point position requirement is considered herein to be a Modified FBT Apparatus (or MFA), whether or not the apparatus required a modification to conform. The term 20/80 CSFBT Test will refer herein to the CSFBT Test when performed with an MFA and the 20% biodiesel blend with the isoparaffinic diesel-surrogate solvent prescribed in CAN/CGSB-3.0 No. 142.0.

The second modification to the CSFBT Test method arose from recent evaluations of the CSFBT Test method with a MFA that demonstrated that test results for blends with greater than 50 vol% biodiesel (a "majority biodiesel blend") in the isoparaffinic diesel-surrogate solvent and in SPD can diverge from test results for the 20/80 CSFBT Test. *See, e.g.,* Example 8 herein. Some samples that produced favorable test results in the 20/80 CSFBT Test performed poorly when the CSFBT procedure was applied to samples with more than 60% biodiesel content in the isoparaffinic diesel-surrogate solvent. It has therefore been concluded that a thorough assessment of the suitability of a biodiesel for blending with SPD requires CSFBT results for both majority and minority biodiesel blends. Example 8 provides an overview of CSFBT results for the full range of blends for multiple biodiesels. Based on these and other test results, 80% biodiesel was selected as the preferred majority blend level for biodiesel. The term 80/20 CSFBT Test is therefore designated herein to refer to applying the CSFBT procedure with a Modified FBT Apparatus and an 80% blend of biodiesel in the isoparaffinic diesel-surrogate solvent prescribed by the CSFBT Test. Thus, the second modification to the CSFBT Test requires performing both the 20/80 CSFBT Test and the 80/20 CSFBT Test and then assigning the less favorable (*i.e.*, higher) result of the two tests as the Modified CSFBT Test Procedure score.

The Modified CSFBT Test Procedure score may be used to make decisions about suitable storage and usage conditions for biodiesel-SPD blends. Table 1 below provides non-limiting guidance for minimum fuel temperature limits for the relevant range of blends of biodiesel and synthetic paraffinic diesel. The recommended fuel temperature limits are relative to fuel Freezing Point values and are assigned according to a combination of the less favorable (*i.e.,* higher) of the 20/80 CSFBT and 80/20 CSFBT scores for the biodiesel component and the biodiesel blend level of the blended fuel. Biodiesel should have 20/80 and 80/20 CSFBT scores less than 1.3 to ensure the blended fuel will perform successfully down to its Freezing Point, and a maximum CSFBT score of 4.0 should be considered the limit for blending minority blends of biodiesel with synthetic paraffinic diesel at any temperature. In general, the better (*i.e.,* lower) the CSFBT score, the lower the acceptable minimum temperature for the blended fuel relative to its Freezing Point. Interestingly, majority blends of certain biodiesels in SPD have been observed to avoid particulate formation at temperatures around the blended fuel Freezing Points better than minority blends, particularly when the biodiesel has an intermediate modified-CSFBT score (*i.e.,* between 1.3 and 4.0). Also, approximately equal blends of biodiesel and isoparaffinic solvent (*i.e.,* 30 - 60% biodiesel) were the least likely to produce an unexpectedly unfavorable CSFBT test score compared to other blends. This supports the surprising observation that approximately equal blends of biodiesel and SPD can produce unexpected Freezing Point reductions relative to the neat Freezing Points of the two blending components.

**Table 1:** Minimum fuel temperature limits for two-component blends of biodiesel and synthetic paraffinic diesel as a function of biodiesel content and biodiesel Modified CSFBT Test Procedure score.

| Biodiesel content in synthetic paraffinic diesel | Modified CSFBT Test Procedure score for the biodiesel in the blend | | | |
|---|---|---|---|---|
| | 1.0 - 1.2 | 1.3 - 1.7 | 1.8 - 4.0 | >4.0 |
| 6 - 30% | BFFP | BFFP + 3 °C | BFFP + 10 °C | Blending not recommended for any fuel temperature |
| 31 - 60% | BFFP | BFFP + 5 °C | BFFFP + 5 °C | BFFP + 10 °C |
| 61 - 95% | BFFP | BFFP + 3 °C | BFFP + 5 °C | Blending not recommended for any fuel temperature |
| BFFP = blended fuel freezing point | | | | |

In addition to the criteria in Table 1, for fuel blends including petroleum diesel or another non-SPD hydrocarbon diesel, such components should also individually have a Freezing Point below the minimum temperature the blended fuel is expected to reach when being dispensed or while in use.

The present technology, thus generally described, will be understood more readily by reference to the following examples, which are provided by way of illustration and are not intended to be limiting of the present technology.

EXAMPLES

Example 1. NOx-vs-PM Balance

Experiments were run on various blends using a 1991 Detroit Diesel Corporation Series 60 diesel test engine. The engine was connected to an electrical dynamometer and redundant water brake to ensure constant load. The engine was fully mapped prior to data collection to ensure peak performance. All tests were conducted in hot-start triplicates.

The synthetic paraffinic diesel ("SPD") used in these examples was produced by a two-step hydroprocessing method. In the first step, a blend of various low value fats and oils, including beef tallow and used cooking oil, was hydrotreated at 520-680 °F and 110 bar (1600 psi) hydrogen partial pressure over a sulfided base metal catalyst system comprising commercially available NiMo catalysts. The catalysts contained 0-5 wt % Ni and 3-15 wt% Mo, impregnated onto shaped alumina extrudates supports. The catalyst size (equivalent diameter) was in the 1.3 to 1.7 mm range. The hydrotreated product was a mainly $C_{13}$-$C_{18}$ paraffinic composition with a cloud point of 22 °C. The fat/oil blend was pretreated to reduce total metals and phosphorus to less than 20 ppm prior to hydrotreating. In the second step, the paraffinic product was stripped of dissolved hydrotreating byproducts (*e.g.*, $H_2S$, $NH_3$, water), and hydroisomerized over a bifunctional catalyst (noble metal hydrogenation-dehydrogenation functionality plus silica-alumina acidic support functionality) at 590-600 °F at 66 bar (960 psi) $H_2$ partial pressure. The hydroisomerizate was then fractionated to yield a diesel fuel with flash point > 60 °C per ASTM D93-13, a cloud point of -11 °C per ASTM D5773-17, a Freezing Point of -5 °C per ASTM D5972-16, and a cetane number > 75 per ASTM D613-14.

The biodiesel used was a blend of fatty acid methyl esters produced by transesterification of soybean oil, used cooking oil, and inedible corn oil with methanol in the presence of a sodium methoxide catalyst. Prior to transesterification the oil feedstocks were acid degummed and free fatty acids were stripped out as necessary to achieve a suitable phosphorus and FFA, respectively, entering the transesterification reaction. Following transesterification and glycerin separation the crude methyl esters were stripped of residual moisture and methanol. The biodiesel used was a combination of two components from this process: 90 vol.% that was distilled in a wiped film evaporator at approximately 230 °C and 4 mbar, and 10 vol.% that was instead cold filtered with diatomaceous earth at 4-10 °C. The finished biodiesel had a cloud point of -1 °C per ASTM D5773-17 and a Freezing Point of 3 °C per ASTM D5972-16.

The petroleum diesel was a reference ULSD fuel characterized by relatively low aromatics and polynuclear aromatics at 9.9 and 7.6 wt.%, respectively. Sulfur content was about 4 ppm and cloud point was -40 °C.

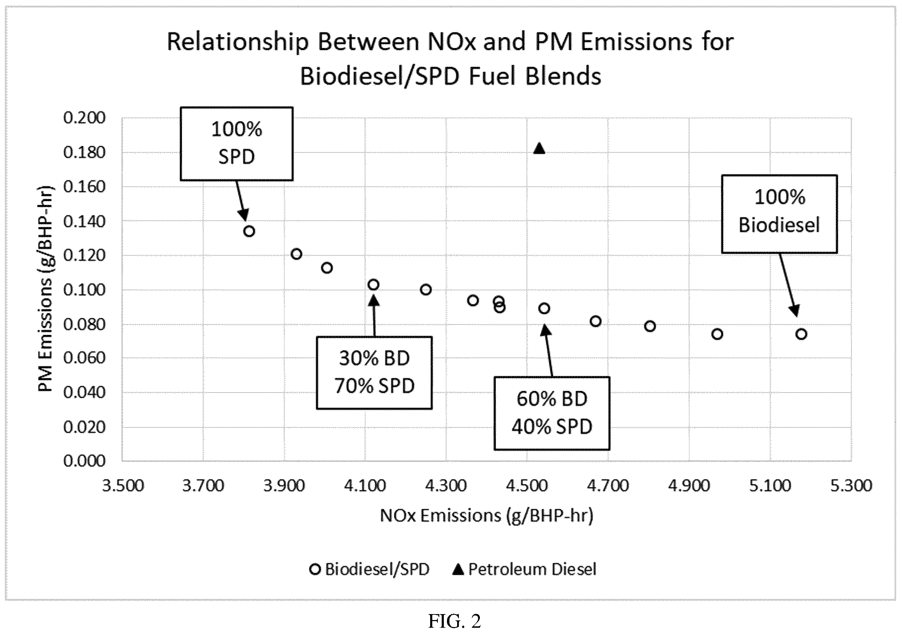

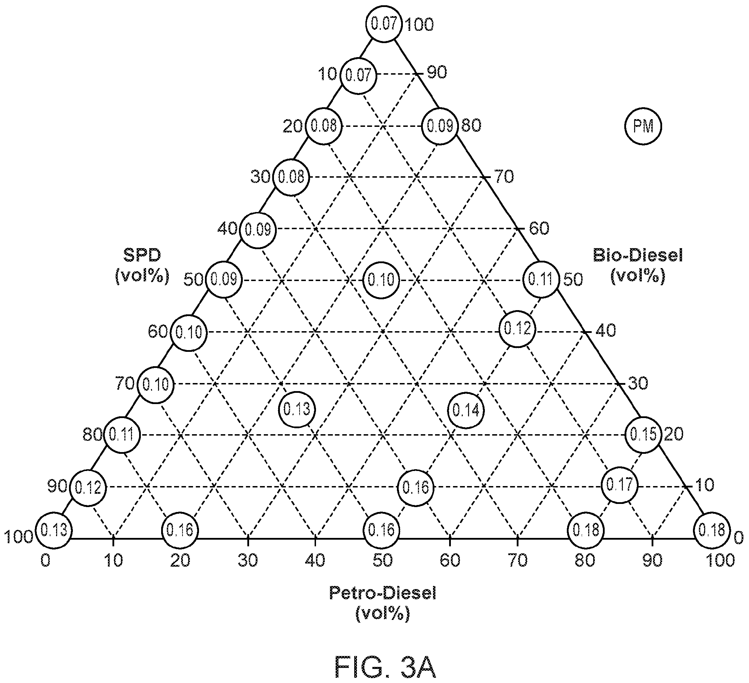

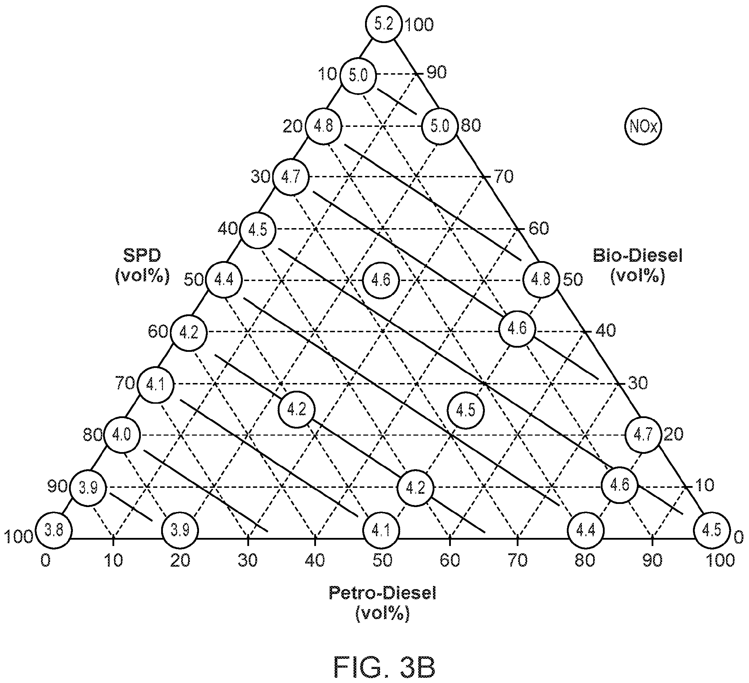

The NOx, PM, CO, and total hydrocarbon emissions were measured on a brake specific basis according to the EPA Federal Test Procedure detailed in 40 CFR, Part 86, Subpart N. For each of the blends, the NOx-vs-PM data points were plotted. As observed in FIG. 2, there is a surprising dampening of the response curve for biodiesel/SPD blends in the 40/60 to 60/40 range. The PM and NOx emissions are respectively presented in FIGs. 3A and 3B for the blends with reference ULSD petroleum fuel.

Example 2. Further Advantageous Emissions Properties

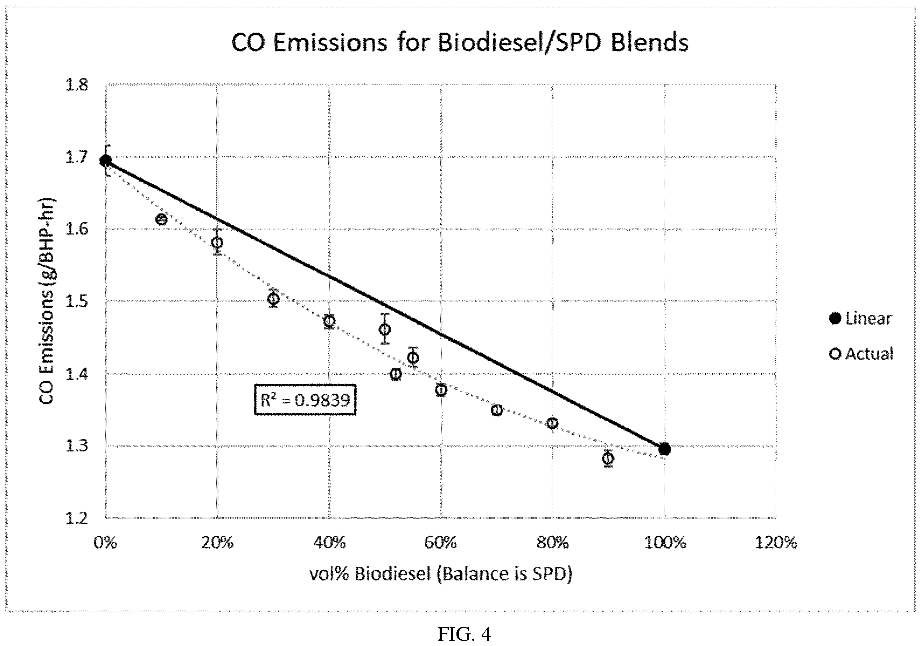

The experiment in Example 1 was also used to measure carbon monoxide emissions for the same biodiesel/SPD blends. The results are plotted in FIG. 4, wherein the error bars represent the standard deviation of triplicates.

Carbon monoxide is a measure of incomplete combustion. With its high H-to-C ratio and high cetane, SPD is considered to be a diesel fuel with superior combustion characteristics. Nevertheless, blending with biodiesel resulted in a surprising and unexpected improvement in CO emissions, particularly around the a SPD:biodiesel ratio of about 2:3 to about 3:2 where a significant and unexpected synergistic effect is observed.

Example 3. Biodegradability of the Fuel Blend

Multiple blended fuel compositions according to the present technology will be prepared and subjected to the ASTM D5864 method for measuring biodegradability. As a non-limiting example, the biodegradability of a reference petroleum diesel fuel will be compared with a blended fuel composition of 20 vol.% distilled biodiesel, 20 vol.% SPD from HDO and HI of a biorenewable feedstock (such as the SPD from Example 1) and 60 vol.% the reference petroleum diesel. The blended fuel composition, containing 20 mg/L BHT anti-oxidant, is expected to exhibit greater than 40+% biodegradability over 23 days, whereas the reference fuel is expected to exhibit substantially less biodegradability.

The ASTM D2274 oxidative stability test will be performed on both samples, where it is expected that the results will be about the same for both samples (~2 mg/100 mL).

Example 4. Studies Regarding Elastomer Swell in Blends of Biodiesel and Synthetic Paraffinic Diesel

Blends of (1) the biodiesel described in Example 1 (herein referred to as "BD") and (2) the synthetic paraffinic diesel described in Example 1 (herein referred to as "SPD") were prepared as outlined in Table 2 for evaluation with common fuel system elastomers. The petroleum diesel described in Example 1 (herein referred to as "PetD1") was used as a reference for elastomer behavior expected with petroleum diesels.

A nitrile butadiene rubber (NBR) and a fluorinated synthetic rubber (FKM) were selected to represent legacy and modern fuel system elastomers, respectively. Size 214 o-rings were purchased from ESP International, an industrial seals distributor, to evaluate the volume change of these elastomers after exposure to the blends listed in Table 2. In accordance with ASTM D471-16a, the elastomers were submersed in each fuel blend and held at 50 °C for 670 h. O-ring volume was measured after exposure to each fuel blend and compared to a control o-ring which was suspended in air at 50 °C for 670 h. The change in volume for the o-rings is reported below in Table 2.

**Table 2.** Compositions of diesel blends used for elastomer swell evaluations per ASTM D471-16a and resulting elastomer swell data for each combination of diesel blends and elastomers.

| | | | Volume Change (vol%) | |
|---|---|---|---|---|
| **BD (vol%)** | **SPD (vol%)** | **PetD1 (vol%)** | **NBR** | **FKM** |
| | | 100% | 7.4% | 1.2% |
| 100% | | | 16.2% | 1.1% |
| | 100% | | -5.1% | 0.1% |
| 20% | 80% | | -0.8% | 0.8% |
| 50% | 50% | | 4.1% | 0.7% |
| 80% | 20% | | 9.6% | 1.0% |

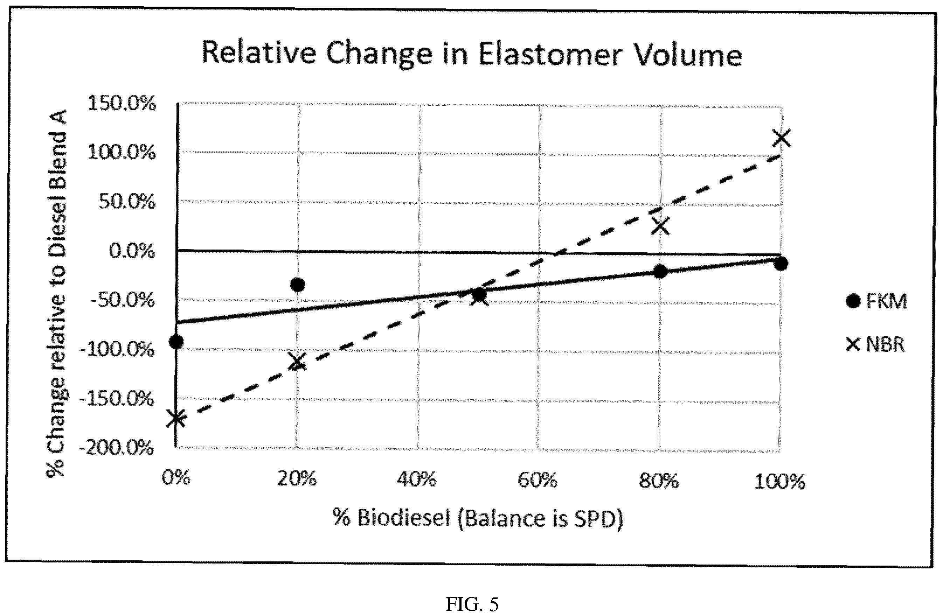

The change in volume for each of the elastomers exposed to blends of biodiesel and synthetic paraffinic diesel was compared to that of the elastomers exposed to the petroleum diesel reference (PetD1) to calculate a relative change in volume. The relative change in elastomer volume data is shown in FIG. 5. These results show a linear relationship between the relative change in elastomer volume and the percent biodiesel in the blend. For the purposes of this study, a relative change in volume within ± 50% of the reference fuel is considered to be approximately equal to that of the reference diesel. NBR demonstrated elastomer swell approximately equal to that caused by the reference diesel when the diesel fuel blend comprised between 50 vol.% and 80 vol.% biodiesel. FKM demonstrated elastomer swell approximately equal to that caused by the reference diesel when the diesel fuel blend comprised between 20 and 100 vol.% biodiesel. These results indicate the surprising benefit of biodiesel when blended with synthetic paraffinic diesel wherein the biodiesel content of the blended fuel composition enables elastomer swell approximately equal to that of petroleum diesel fuels.

Example 5. Studies Regarding Elastomer Swell in Diesel Fuel Blends

Additional elastomer swell studies were conducted to expand upon the work presented in Example 4. A second petroleum diesel ("PetD2") was included in addition to the fuels presented in Example 4, where PetD2 was an ULSD characterized by aromatics and polynuclear aromatics at 29.3 and 4.5 wt%, respectively, as measured according to ASTM D5186-15. Blends of the biodiesel (BD), the synthetic paraffinic diesel (SPD), and the two petroleum diesels (PetD1 and PetD2) were prepared according to Table 3. Elastomer swell was evaluated for the nitrile butadiene rubber (NBR) as described above in Example 4. Similarly, the methods and procedures used for this study were also identical to those disclosed in Example 4.

Table 3. Compositions, aromatics contents, and polynuclear aromatics contents of diesel fuel blends prepared for evaluation of elastomer swell.

| BD (vol.%) | SPD (vol.%) | PetD1 (vol.%) | PetD2 (vol.%) | Aromatics (wt%) | Polynuclear Aromatics (wt%) | NBR Swell (vol.%) |
|---|---|---|---|---|---|---|
| 100% | | | | 0% | 0% | 16.2% |
| | 100% | | | 0% | 0% | -5.1% |
| | | 100% | | 9.9% | 7.6% | 7.4% |
| | | | 100% | 29.3% | 4.5% | 3.1% |
| 50% | 50% | | | 0% | 0% | 4.1% |
| 20% | 80% | | | 0% | 0% | -0.8% |
| 80% | 20% | | | 0% | 0% | 9.6% |
| | 20% | 80% | | 8.0% | 6.2% | 9.5% |
| | 20% | | 80% | 24.2% | 3.7% | 1.45% |

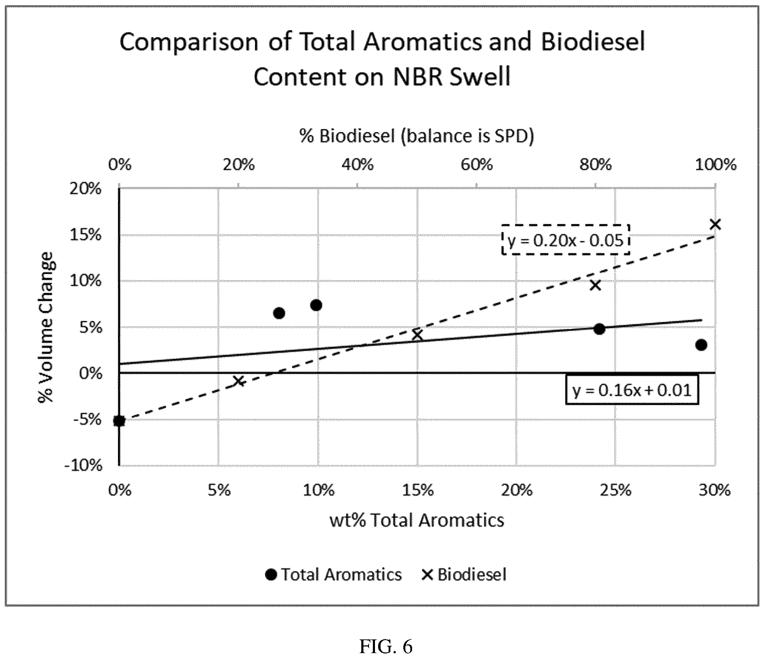

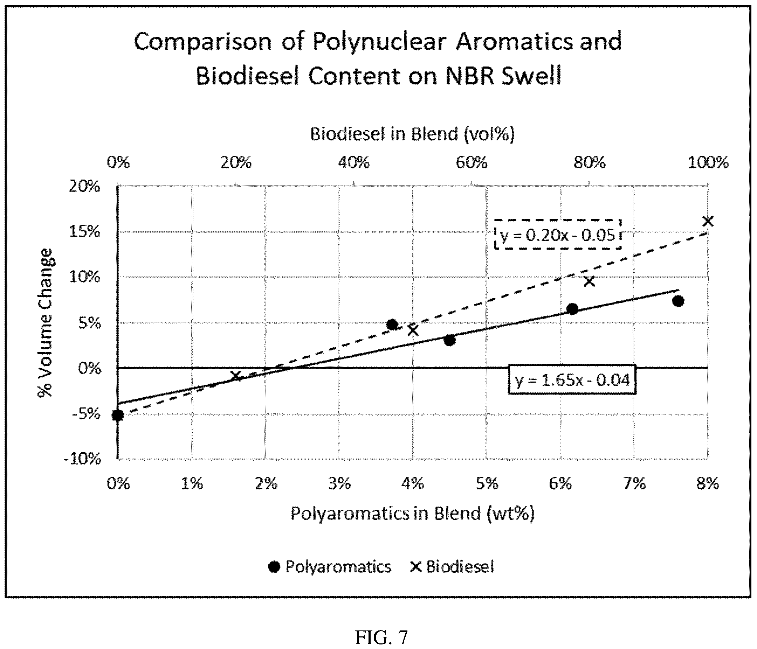

This study provides a comparison of the effect of aromatics in hydrocarbon diesel blends on NBR swell to that of biodiesel in blends with synthetic paraffinic diesel. This is best illustrated by comparing the trends shown in FIG. 6 and FIG. 7. In FIG. 6, the impact of total aromatics on NBR swell is compared to that of biodiesel, and demonstrates a poor correlation. In contrast, FIG. 7 shows the impact of polynuclear aromatics on NBR swell with a much better correlation with the impact of biodiesel on NBR swell. This data indicates that polynuclear aromatics, rather than total aromatics, are more strongly correlated with the impact of biodiesel on blends with synthetic paraffinic diesel.

Example 6. Cold-Flow Properties of Blended Fuel Compositions

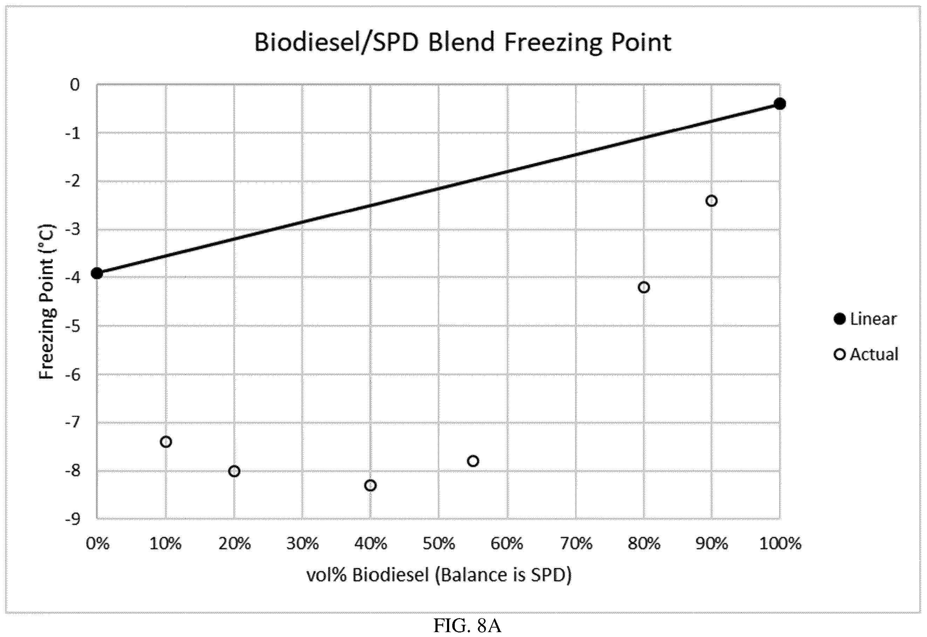

Blends of (1) the SPD described in Example 1 and (2) the biodiesel described in Example 1 were prepared and subjected to the ASTM 5972-16 method for measuring Freezing Point. The blended fuels of the present technology demonstrated an improvement over predicted values from the individual components when the components were blended in all proportions, as shown in FIG. 8A. Furthermore, blends with 80 vol.% or less biodiesel exhibited an improvement even over each of the individual components alone. This demonstrates an unexpected improvement in cold flow properties achieved from blends of biodiesel and SPD according to the present technology.

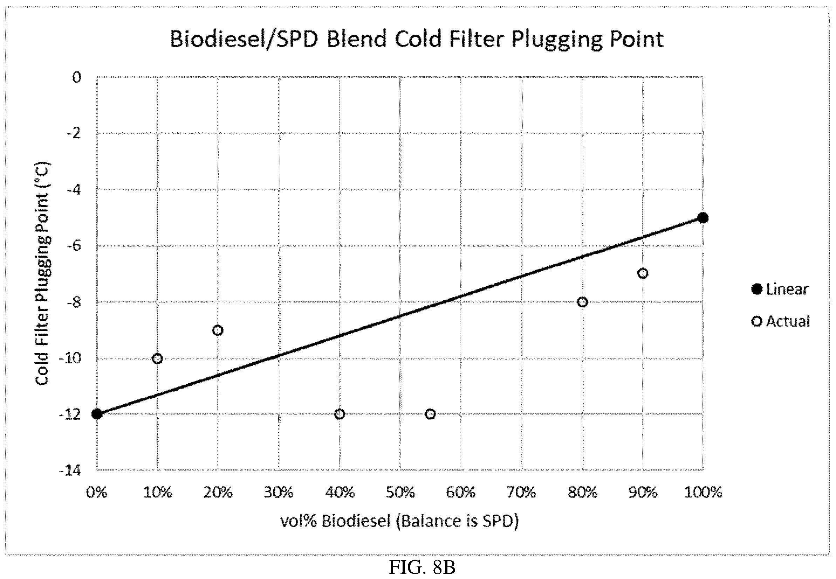

These fuels were also subjected to the ASTM D6371-17 method for measuring the cold filter plugging point (CFPP). Blends of 40 vol% biodiesel or greater are shown in FIG. 8B to offer an improvement over the predicted results from the individual components. Blends between 40 and 60 vol% biodiesel offered the most surprising benefit. This also represents an unexpected cold flow benefit of blending biodiesel with a synthetic paraffinic diesel according to the present technology.

Example 7. Benefit of Distilled Biodiesel in Cold Conditions

Three biodiesel samples were prepared wherein each sample was a mixture of fatty acid methyl esters produced by transesterification (with methanol in the presence of a sodium methoxide catalyst) of, respectively, soybean oil (Sample 1), used cooking oil and inedible corn oil (Sample 2), and inedible corn oil and rendered animal fats (Sample 3). Prior to transesterification the oil feedstocks were acid degummed and free fatty acids were stripped out as necessary to achieve a suitable phosphorus and FFA, respectively, entering the reaction. Following transesterification and glycerin separation the crude methyl esters were stripped of residual moisture and methanol. The soybean oil methyl ester sample was cold-filtered with diatomaceous earth at 4-10 °C and had a cloud point of -1 °C according to ASTM D5773-17, where Sample 1 is also herein referred to as "undistilled soy". Samples 2 and 3 were distilled in wiped film evaporators at approximately 230 °C and 4 mbar, and had a cloud point of 2 °C and 7 °C, respectively, according to ASTM D5773-17. Samples 2 and (3) are also herein referred to as Distilled REG-9000/5 (or REG Distilled 5°C) and Distilled REG-9000/10 (or REG Distilled 10°C), respectively.

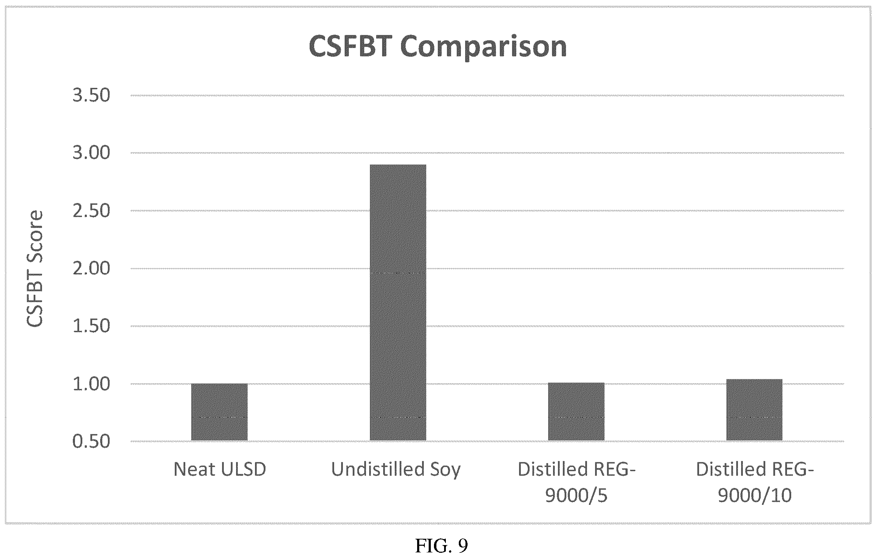

These biodiesel fuels were subjected to the CAN/CGSB-3.0 No. 142.0 method for measuring cold soak filter blocking tendency (the CSFBT Test). The CSFBT Test is a predictive indicator of the cold weather suitability of biodiesel fuels as blend components with hydrocarbon fuels, including both petroleum diesels and synthetic paraffinic diesels. A "perfect" CSFBT Test score is 1.00. Samples 2 and 3 demonstrated a CSFBT Test score of less than 1.05 as shown in FIG. 9. This is in contrast to the cold weather suitability indicated by cloud point alone, and illustrates the benefits of distilled biodiesel in cold conditions.

Example 8. CSFBT test results for a range of biodiesel blends

Three biodiesel samples (1) produced from a blend consisting of predominantly Distiller's Corn Oil, Used Cooking Oil, and Choice White Grease, (2) produced from a blend consisting of predominantly Used Cooking Oil, Yellow Grease, and Bleachable Fancy Tallow, and (3) produced from a blend consisting of predominantly Choice White Grease, Used Cooking Oil, Distiller's Corn Oil, and Bleachable Fancy Tallow were blended with a SPD similar to the SPD of Example 1 with the exception of a -14°C cloud point. Each biodiesel sample was blended with the SPD across the entire range from 0 to 100 vol% biodiesel in SPD. The three biodiesels met all of the requirements for the ASTM D6751-18 biodiesel specification, including having Cold Soak Filtration test times less than 200 seconds.

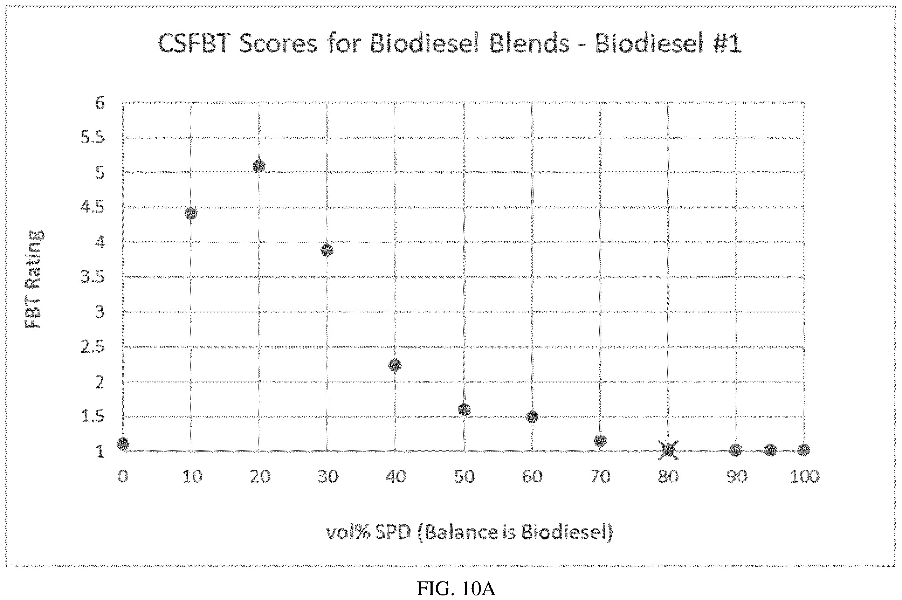

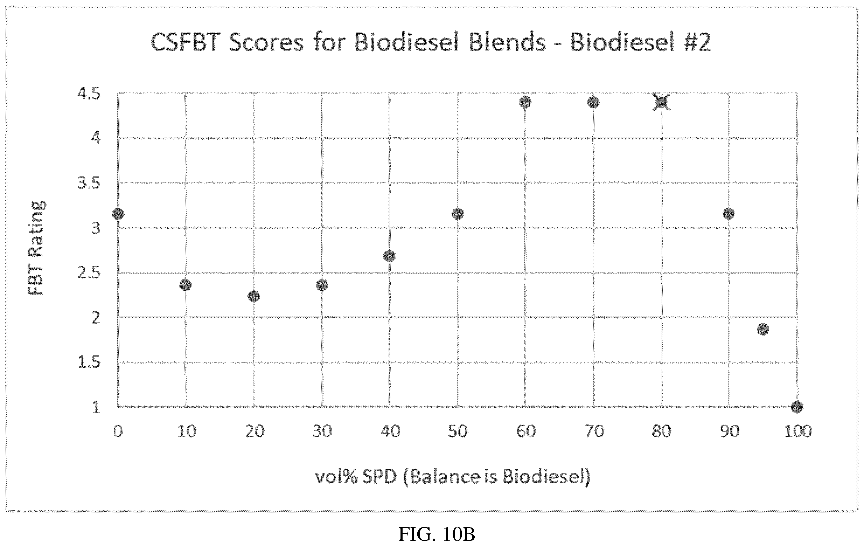

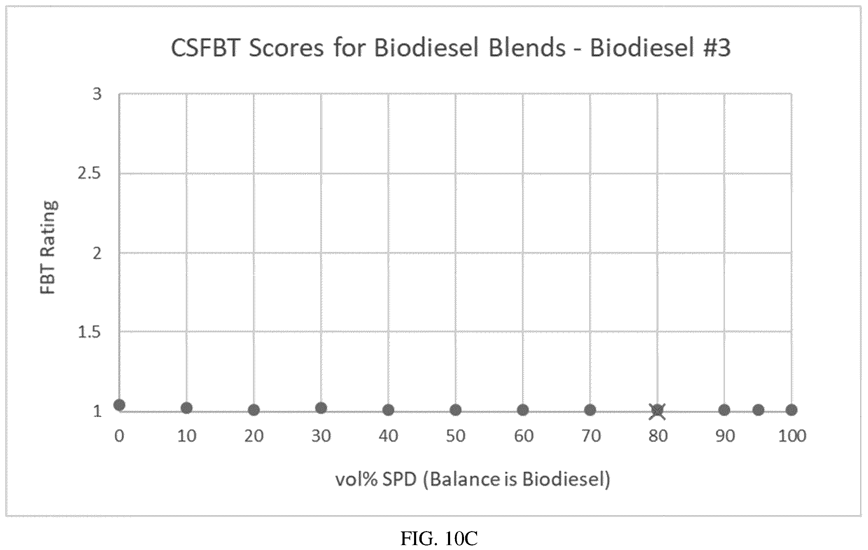

Biodiesels number 1 and 3 were distilled and Biodiesel number 2 was cold filtered. The test results in FIGs. 10A - 10C demonstrate the potential for filter plugging potential to be detected at different points in the blend range. This supports that the Modified CSFBT Test Procedure provides the better analysis of the potential for a biodiesel blend with SPD to contribute to filter plugging issues. The data also support that approximately equal ratios of biodiesel and SPD are less likely, in general, to contribute to filter plugging concerns than minority and majority biodiesel blends.

Example 9. Comparison of 20/80 CSFBT Test scores to precipitation tendency for blends of biodiesel and synthetic paraffinic diesel

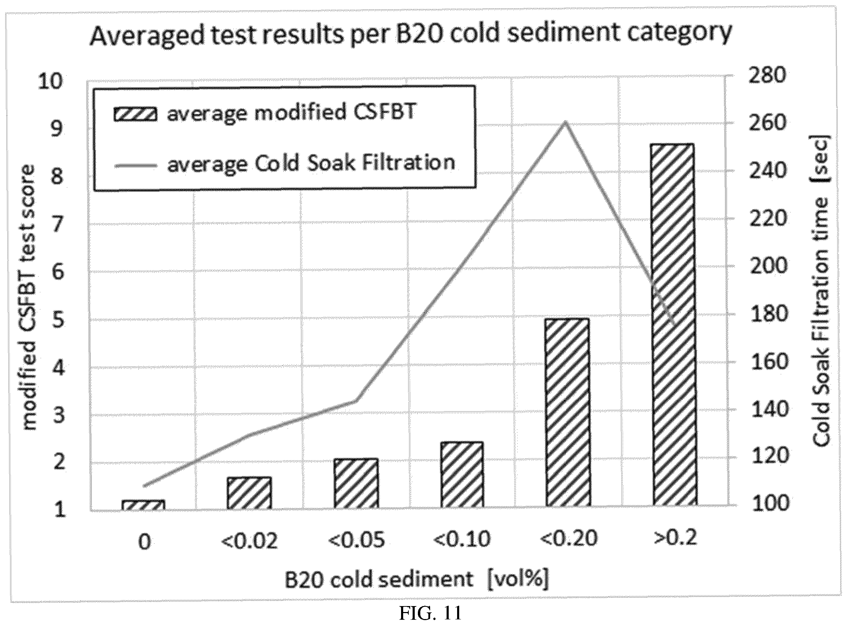

A cold precipitation test was performed on 805 blends of biodiesel and a synthetic paraffinic diesel sample. Each biodiesel sample was blended to a B20 level, chilled for 16 hours at 1 °C and then centrifuged after being returned to 25 °C. Sediment was quantified volumetrically using the gradations on the centrifuge tube, and test results were compared to results for the B100 Cold Soak Filtration test (a B100 test) and the CSFBT Test performed using a Modified FBT Apparatus (*i.e.*, the 20/80 CSFBT Test). FIG. 11 provides averaged results for both the Cold Soak Filtration test and the 20/80 CSFBT Test for each of six levels of precipitate formation, from zero to greater than 0.2 vol%. This data set confirms that the Cold Soak Filtration test is not an adequate predictor of the tendency for filter plugging precipitate formation in blends of biodiesel and SPD and that the 20/80 CSFBT provides more prescriptive results across the full range of potential precipitation quantity.

While certain embodiments have been illustrated and described, it should be understood that changes and modifications can be made therein in accordance with ordinary skill in the art without departing from the technology in its broader aspects as defined in the following claims.

The embodiments, illustratively described herein may suitably be practiced in the absence of any element or elements, limitation or limitations, not specifically disclosed herein. Thus, for example, the terms "comprising," "including," "containing," etc. shall be read expansively and without limitation. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the claimed technology. Additionally, the phrase "consisting essentially of" will be understood to include those elements specifically recited and those additional elements that do not materially affect the basic and novel characteristics of the claimed technology. The phrase "consisting of" excludes any element not specified.

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, particularly in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, *etc.* As a non-limiting example, each range discussed herein can be readily broken down into a lower third, middle third and upper third, *etc.* As will also be understood by one skilled in the art all language such as "up to," "at least," "greater than," "less than," and the like, include the number recited and refer to ranges which can be subsequently broken down into subranges as discussed above. Finally, as will be understood by one skilled in the art, a range includes each individual member.

**Claims**

1. A method of producing a blended fuel composition comprising combining:

   about 5 vol.% to about 95 vol.% of synthetic paraffinic diesel that is a hydroprocessed biorenewable feedstock comprising a hydrotreated and hydroisomerized biorenewable feedstock;
   about 5 vol.% to about 95 vol.% of a biodiesel that comprises a distilled biodiesel, a biodiesel with a Modified CSFBT Test Procedure score of less than about 4.0, or both, wherein a volume ratio of synthetic paraffinic diesel to biodiesel in the blended fuel composition is about 10:90 to about 90:10; and
   about 0 vol.% to about 90 vol.% of a petroleum diesel, provided that at least about 8 vol.% biodiesel is included when the blended fuel composition does not include the petroleum diesel;
   to produce the blended fuel composition,
   wherein the "biodiesel" consists of fatty acid $C_1$-$C_4$ alkyl esters produced by esterification and/or transesterification reactions between a C1-C4 alkyl alcohol and free fatty acids and/or fatty acid glycerides;
   "petroleum diesel" is a diesel fuel produced from crude oil; and
   wherein the Modified CSFBT Test Procedure is as defined in the description;
   wherein "about" provides an error margin of up to plus or minus 5%.

2. The method of Claim 1 wherein the synthetic paraffinic diesel and the biodiesel are combined to form an initial blend, and the initial blend is subsequently combined with the petroleum diesel.

3. The method of either one of Claim 1 and Claim 2, wherein the hydroprocessed biorenewable feedstock comprises

   at least about 80 wt% of two or more different carbon number paraffins that fall within the $C_{11}$ to $C_{18}$ range;
   less than about 0.5 wt% oxygenates;
   about 0.1 wt% to about 18 wt% cycloparaffins; and
   less than about 1 wt % aromatics; and

   wherein the hydroprocessed biorenewable feedstock possesses

   a density less than about 0.800 kg/L;
   a biodegradability of at least about 40% after about 23 days of exposure to microorganisms capable of degrading hydrocarbons; and
   an $LC_{50}$ value of greater than about 3.5 mg/L on *Daphia magna*.

4. The method of any preceding Claim wherein the hydroprocessed biorenewable feedstock comprises a hydroprocessed product of an animal fat, animal oil, microbial oil, plant fat, plant oil, vegetable fat, vegetable oil, grease, or a mixture of any two or more thereof.

5. The method of any preceding Claim, wherein the synthetic paraffinic diesel exhibits a cetane number of at least about 70 as measured by ASTM D613, suitably wherein the synthetic paraffinic diesel exhibits a cetane number of at least about 73 as measured by ASTM D613.

6. The method of any preceding claim wherein the composition comprises about 6 vol.% to about 50 vol.% of the synthetic paraffinic diesel: about 6 vol.% to about 50 vol.% of the biodiesel; and about 0 vol.% to about 88 vol.% of the petroleum diesel; Or wherein the composition comprises about 10 vol.% to about 30 vol.% of the synthetic paraffinic diesel: about 10 vol.% to about 30 vol. % of the biodiesel; and about 4 vol.% to about 80 vol.% of the petroleum diesel; Or wherein the composition comprises about 20 vol.% to about 25 vol.% of the synthetic paraffinic diesel: about 20 vol.% to about 25 vol.% of the biodiesel; and about 50 vol.% to about 60 vol.% of the petroleum diesel.

7. The method of any preceding Claim, wherein a volume ratio of synthetic paraffinic diesel to biodiesel in the blended fuel composition is about 45:55 to about 55:45.

8. The method of any preceding Claim wherein the hydroprocessed biorenewable feedstock comprises a hydroprocessed product of corn oil, inedible corn oil, babassu oil, carinata oil, soybean oil, canola oil, coconut oil, rapeseed oil, tall oil, tall oil fatty acid, palm oil, palm oil fatty acid distillate, jatropha oil, palm kernel oil, sunflower oil, castor oil, camelina oil, archaeal oil, bacterial oil, fungal oil, protozoal oil, algal oil, seaweed oil, oils from halophiles, rendered fats, inedible tallow, edible tallow, technical tallow, floatation tallow, lard, poultry fat, poultry oils, fish fat, fish oils, frying oils, yellow grease, brown grease, waste vegetable oils, restaurant greases, trap grease from municipalities such as water treatment facilities, and spent oils from industrial packaged food operations, or a mixture of any two or more thereof.

9. The method of any preceding Claim, wherein the paraffins of the synthetic paraffinic diesel comprise $C_{16}$ and $C_{18}$ paraffins, or wherein the synthetic paraffinic diesel has:

> a sulfur content less than about 5 wppm,
> less than about 0.5 wt % aromatics,
> less than about 0.01 wt% benzene, or
> has a cloud point less than about -10 °C.

10. The method of any preceding Claim, wherein paraffins of the synthetic paraffinic diesel comprise iso-paraffins and n-paraffins, generally wherein a weight ratio of iso-paraffins to n-paraffins is at least about 4:1.

11. The method of any preceding Claim, wherein the biodiesel comprises a fatty acid $C_1$-$C_4$ alkyl ester produced from an animal fat, animal oil, microbial oil, plant fat, plant oil, vegetable fat, vegetable oil, grease, or a mixture of any two or more thereof, generally wherein the biodiesel comprises a fatty acid $C_1$-$C_4$ alkyl ester produced from corn oil, inedible corn oil, babassu oil, carinata oil, soybean oil, canola oil, coconut oil, rapeseed oil, tall oil, tall oil fatty acid, palm oil, palm oil fatty acid distillate, jatropha oil, palm kernel oil, sunflower oil, castor oil, camelina oil, archaeal oil, bacterial oil, fungal oil, protozoal oil, algal oil, seaweed oil, oils from halophiles, rendered fats, inedible tallow, edible tallow, technical tallow, floatation tallow, lard, poultry fat, poultry oils, fish fat, fish oils, frying oils, yellow grease, brown grease, waste vegetable oils, restaurant greases, trap grease from municipalities such as water treatment facilities, and spent oils from industrial packaged food operations, or a mixture of any two or more thereof, or, wherein the biodiesel comprises a fatty acid methyl ester, a fatty acid ethyl ester, a fatty acid propyl ester, a fatty acid butyl ester, or a mixture of any two or more thereof.

12. The method of any preceding Claim, wherein the biodiesel comprises a cold-filtered biodiesel that is not distilled, or a distilled biodiesel, generally wherein the biodiesel comprises distilled biodiesel and a cold-filtered biodiesel, and wherein a volume ratio of cold-filtered biodiesel to distilled biodiesel is about 100:1 to about 1:100.

13. The method of any preceding Claim, wherein the biodiesel has a Modified CSFBT Test Procedure score of about 1.2 to 1.0, generally wherein the biodiesel comprises an additive that reduces a Modified CSFBT Test Procedure score.

14. The method of any preceding Claim, wherein the petroleum diesel is hydrotreated straight-run diesel, hydrotreated fluidized catalytic cracker (FCC) light cycle oil, hydrotreated coker light gasoil, hydrocracked FCC heavy cycle oil, and combinations thereof.

**Patentansprüche**

1. Verfahren zum Produzieren einer gemischten Brennstoffzusammensetzung, umfassend Kombinieren von:

> etwa 5 Vol.-% bis etwa 95 Vol.-% synthetischen paraffinischen Diesel, der ein hydroverarbeiteter biologisch erneuerbarer Rohstoff ist, der einen hydrobehandelten und hydroisomerisierten biologisch erneuerbaren Rohstoff umfasst;
> etwa 5 Vol.-% bis etwa 95 Vol.-% eines Biodiesels, der einen destillierten Biodiesel, einen Biodiesel mit einer Bewertung des modifizierten CSFBT-Testvorgangs von weniger als etwa 4,0 oder beides umfasst, wobei ein Volumenverhältnis von synthetischem paraffinischem Diesel zu Biodiesel in der gemischten Brennstoffzusammensetzung etwa 10:90 bis etwa 90:10 ist; und
> etwa 0 Vol.-% bis etwa 90 Vol.-% eines Erdöldiesels, vorausgesetzt, dass zumindest etwa 8 Vol.-% Biodiesel enthalten sind, wenn die gemischte Brennstoffzusammensetzung den Erdöldiesel nicht beinhaltet;
> um die gemischte Brennstoffzusammensetzung zu produzieren,

wobei der "Biodiesel" aus Fettsäure-$C_1$-$C_4$-Alkylestern besteht, die durch Veresterungs- und/oder Umesterungsreaktionen zwischen einem C1-C4-Alkylalkohol und freien Fettsäuren und/oder Fettsäureglyceriden produziert werden;

"Erdöldiesel" ein Dieselbrennstoff ist, der aus Rohöl produziert ist; und

wobei der modifizierte CSFBT-Testvorgang wie in der Beschreibung definiert ist;

wobei "etwa" eine Fehlermarge von bis zu plus oder minus 5 % bereitstellt.

2. Verfahren nach Anspruch 1, wobei der synthetische paraffinische Diesel und der Biodiesel kombiniert werden, um eine anfängliche Mischung zu bilden, und die anfängliche Mischung anschließend mit dem Erdöldiesel kombiniert wird.

3. Verfahren nach einem von Anspruch 1 und Anspruch 2, wobei der hydroverarbeitete biologisch erneuerbare Rohstoff Folgendes umfasst

zumindest etwa 80 Gew.-% von zwei oder mehr verschiedenen Kohlenstoffzahlparaffinen, die in den $C_{11}$- bis $C_{18}$-Bereich fallen;

weniger als etwa 0,5 Gew.-% Oxygenate;

etwa 0,1 Gew.-% bis etwa 18 Gew.-% Cycloparaffine; und

weniger als etwa 1 Gew.-% Aromaten; und

wobei der hydroverarbeitete biologisch erneuerbare Rohstoff Folgendes besitzt

eine Dichte von weniger als etwa 0,800 kg/l;

eine biologische Abbaubarkeit von zumindest etwa 40 % nach etwa 23 Tagen Exposition gegenüber Mikroorganismen, die in der Lage sind, Kohlenwasserstoffe abzubauen; und

einen $LC_{50}$-Wert von mehr als etwa 3,5 mg/l an *Daphnia magna.*

4. Verfahren nach einem vorhergehenden Anspruch, wobei der hydroverarbeitete biologisch erneuerbare Rohstoff ein hydroverarbeitetes Produkt aus einem tierischen Fett, tierischen Öl, mikrobiellen Öl, Pflanzenfett, Pflanzenöl, Pflanzenfett, Pflanzenöl, Schmiere oder einer Mischung aus beliebigen zwei oder mehr davon umfasst.

5. Verfahren nach einem vorhergehenden Anspruch, wobei der synthetische paraffinische Diesel eine Cetanzahl von zumindest etwa 70 wie gemessen nach ASTM D613 aufweist, wobei geeignet der synthetische paraffinische Diesel eine Cetanzahl von zumindest etwa 73 wie gemessen nach ASTM D613 aufweist.

6. Verfahren nach einem vorhergehenden Anspruch, wobei die Zusammensetzung etwa 6 Vol.-% bis etwa 50 Vol.-% des synthetischen paraffinischen Diesels umfasst: etwa 6 Vol.-% bis etwa 50 Vol.-% des Biodiesels; und etwa 0 Vol.-% bis etwa 88 Vol.-% des Erdöldiesels; oder wobei die Zusammensetzung etwa 10 Vol.-% bis etwa 30 Vol.-% des synthetischen paraffinischen Diesels umfasst: etwa 10 Vol.-% bis etwa 30 Vol.-% des Biodiesels; und etwa 4 Vol.-% bis etwa 80 Vol.-% des Erdöldiesels; oder wobei die Zusammensetzung etwa 20 Vol.-% bis etwa 25 Vol.-% des synthetischen paraffinischen Diesel umfasst: etwa 20 Vol.-% bis etwa 25 Vol.-% des Biodiesels; und etwa 50 Vol.-% bis etwa 60 Vol.-% des Erdöldiesels.

7. Verfahren nach einem vorhergehenden Anspruch, wobei ein Volumenverhältnis von synthetischem paraffinischem Diesel zu Biodiesel in der gemischten Brennstoffzusammensetzung etwa 45:55 bis etwa 55:45 ist.

8. Verfahren nach einem vorhergehenden Anspruch, wobei der hydroverarbeitete biologisch erneuerbare Rohstoff ein hydroverarbeitetes Produkt aus Maisöl, nicht essbarem Maisöl, Babassuöl, Carinataöl, Sojabohnenöl, Canolaöl, Kokosnussöl, Rapsöl, Tallöl, Tallölfettsäure, Palmöl, Palmölfettsäuredestillat, Jatrophaöl, Palmkernöl, Sonnenblumenöl, Rizinusöl, Kamelinaöl, Archaeenöl, Bakterienöl, Pilzöl, Protozoenöl, Algenöl, Seegrasöl, Ölen von Halophilen, ausgeschmolzenen Fetten, nicht essbarem Talg, essbarem Talg, technischem Talg, Schwimmtalg, Schmalz, Geflügelfett, Geflügelölen, Fischfett, Fischölen, Bratölen, gelber Schmiere, brauner Schmiere, pflanzlichen Altölen, Restaurantschmieren, Abscheideschmiere von Kommunen wie Wasseraufbereitungsanlagen und verbrauchten Ölen von industriellen verpackten Lebensmittelbetrieben oder einer Mischung von beliebigen zwei oder mehr davon umfasst.

9. Verfahren nach einem vorhergehenden Anspruch, wobei die Paraffine des synthetischen paraffinischen Diesels $C_{16}$- und $C_{18}$-Paraffine umfassen oder wobei der synthetische paraffinische Diesel Folgendes aufweist:

einen Schwefelgehalt von weniger als etwa 5 wppm,

weniger als etwa 0,5 Gew.- % Aromaten,
weniger als etwa 0,01 Gew.-% Benzol, oder
einen Trübungspunkt von weniger als etwa -10 °C aufweist.

10. Verfahren nach einem vorhergehenden Anspruch, wobei Paraffine des synthetischen paraffinischen Diesels Isoparaffine und n-Paraffine umfassen, wobei im Allgemeinen ein Gewichtsverhältnis von Isoparaffinen zu n-Paraffinen zumindest etwa 4:1 ist.

11. Verfahren nach einem vorhergehenden Anspruch, wobei der Biodiesel einen Fettsäure-$C_1$-$C_4$-Alkylester umfasst, der aus einem tierischen Fett, tierischen Öl, mikrobiellen Öl, Pflanzenfett, Pflanzenöl, Pflanzenfett, Pflanzenöl, Schmiere oder einer Mischung von beliebigen zwei oder mehr davon produziert ist, wobei im Allgemeinen der Biodiesel einen Fettsäure-$C_1$-$C_4$-Alkylester produziert aus Maisöl, nicht essbarem Maisöl, Babassuöl, Carinataöl, Sojabohnenöl, Canolaöl, Kokosnussöl, Rapsöl, Tallöl, Tallölfettsäure, Palmöl, Palmölfettsäuredestillat, Jatrophaöl, Palmkernöl, Sonnenblumenöl, Rizinusöl, Kamelinaöl, Archaeenöl, Bakterienöl, Pilzöl, Protozoenöl, Algenöl, Seegrasöl, Ölen von Halophilen, ausgeschmolzenen Fetten, nicht essbarem Talg, essbarem Talg, technischem Talg, Schwimmtalg, Schmalz, Geflügelfett, Geflügelölen, Fischfett, Fischölen, Bratölen, gelber Schmiere, brauner Schmiere, pflanzlichen Altölen, Restaurantschmieren, Abscheideschmiere von Kommunen wie Wasseraufbereitungsanlagen und verbrauchten Ölen aus industriell verpackten Lebensmittelbetrieben oder einer Mischung von beliebigen zwei oder mehr davon umfasst, oder wobei der Biodiesel einen Fettsäuremethylester, einen Fettsäureethylester, einen Fettsäurepropylester, einen Fettsäurebutylester oder eine Mischung von beliebigen zwei oder mehr davon umfasst.

12. Verfahren nach einem vorhergehenden Anspruch, wobei der Biodiesel einen kaltgefilterten Biodiesel, der nicht destilliert ist, oder einen destillierten Biodiesel umfasst, wobei im Allgemeinen der Biodiesel destillierten Biodiesel und einen kaltgefilterten Biodiesel umfasst, und wobei ein Volumenverhältnis von kaltgefiltertem Biodiesel zu destilliertem Biodiesel etwa 100:1 bis etwa 1:100 ist.

13. Verfahren nach einem vorhergehenden Anspruch, wobei der Biodiesel eine Bewertung des modifizierten CSFBT-Testvorgangs von etwa 1,2 bis 1,0 aufweist, wobei im Allgemeinen der Biodiesel ein Additiv umfasst, das eine Bewertung des modifizierten CSFBT-Testvorgangs reduziert.

14. Verfahren nach einem vorhergehenden Anspruch, wobei der Erdöldiesel hydrobehandelter Straight-Run-Diesel, hydrobehandeltes fluidisiertes katalytisches Cracker(FCC-)Leichttaktöl, hydrobehandeltes Koks-Leichtgasöl, hydrogecracktes FCC-Schwertaktöl und Kombinationen davon ist.

## Revendications

1. Procédé de production d'une composition de carburants mélangés comprenant la combinaison de :

environ 5 % en volume à environ 95 % en volume de diesel paraffinique synthétique qui est une matière première biorenouvelable hydrotraitée comprenant une matière première biorenouvelable hydrotraitée et hydroisomérisée ;
environ 5 % en volume à environ 95 % en volume d'un biodiesel qui comprend un biodiesel distillé, un biodiesel avec un score de procédure de test CSFBT modifiée inférieur à environ 4,0, ou les deux, dans lequel un rapport volumique de diesel paraffinique synthétique à du biodiesel dans la composition de carburants mélangés est d'environ 10:90 à environ 90:10 ; et
environ 0 % en volume à environ 90 % en volume d'un diesel pétrolier, à condition qu'au moins environ 8 % en volume de biodiesel soient compris lorsque la composition de carburants mélangés ne comprend pas le diesel pétrolier ;
pour produire la composition de carburants mélangés,
dans lequel le « biodiesel » comprend des esters d'alkyle en $C_1$-$C_4$ d'acides gras produits par des réactions d'estérification et/ou de transestérification entre un alcool alkyle en $C_1$-$C_4$ et des acides gras libres et/ou des glycérides d'acides gras ;
« diesel pétrolier » désigne un carburant diesel produit à partir de pétrole brut ; et dans lequel la procédure de test CSFBT modifiée est telle que définie dans la description ;
dans lequel « environ » fournit une marge d'erreur allant jusqu' à plus ou moins 5 %.

**2.** Procédé de la revendication 1, dans lequel le diesel paraffinique synthétique et le biodiesel sont combinés pour former un mélange initial, et le mélange initial est ensuite combiné avec le diesel pétrolier.

**3.** Procédé de l'une quelconque des revendications 1 et 2, dans lequel la matière première biorenouvelable hydrotraitée comprend

au moins environ 80 % en poids de deux ou plus paraffines à nombres de carbone différents qui se situent dans la plage $C_{11}$ à $C_{18}$ ;
moins d'environ 0,5 % en poids de composés oxygénés ;
d'environ 0,1 % en poids à environ 18 % en poids de cycloparaffines ; et
moins d'environ 1 % en poids d'aromatiques ; et
dans lequel la matière première biorenouvelable hydrotraitée possède
une densité inférieure à environ 0,800 kg/L ;
une biodégradabilité d'au moins environ 40 % après environ 23 jours d'exposition à des micro-organismes capables de dégrader les hydrocarbures ; et
une valeur $DL_{50}$ supérieure à environ 3,5 mg/L par *Daphnia magna.*

**4.** Procédé d'une quelconque revendication précédente, dans lequel la matière première biorenouvelable hydrotraitée comprend un produit hydrotraité d'une graisse animale, d'une huile animale, d'une huile microbienne, d'une graisse végétale, d'une huile végétale, d'une graisse de légume, d'une huile de légume, d'une graisse, ou d'un mélange de deux de celles-ci ou plus.

**5.** Procédé d'une quelconque revendication précédente, dans lequel le diesel paraffinique synthétique montre un indice de cétane d'au moins environ 70 tel que mesuré par ASTM D613, de manière appropriée dans lequel le diesel paraffinique synthétique montre un indice de cétane d'au moins environ 73 tel que mesuré par ASTM D613.

**6.** Procédé d'une quelconque revendication précédente dans lequel la composition comprend d'environ 6 % en volume à environ 50 % en volume du diesel paraffinique synthétique : d'environ 6 % en volume à environ 50 % en volume du biodiesel ; et d'environ 0 % en volume à environ 88 % en volume du diesel pétrolier ; Ou dans lequel la composition comprend d'environ 10 % en volume à environ 30 % en volume du diesel paraffinique synthétique : d'environ 10 % en volume à environ 30 % en volume du biodiesel ; et d'environ 4 % en volume à environ 80 % en volume du diesel pétrolier ; Ou dans lequel la composition comprend d'environ 20 % en volume à environ 25 % en volume du diesel paraffinique synthétique : d'environ 20 % en volume à environ 25 % en volume du biodiesel ; et d'environ 50 % en volume à environ 60 % en volume du diesel pétrolier.

**7.** Procédé d'une quelconque revendication précédente, dans lequel un rapport volumique de diesel paraffinique synthétique à du biodiesel dans la composition de carburants mélangés est d'environ 45:55 à environ 55:45.

**8.** Procédé d'une quelconque revendication précédente, dans lequel la matière première biorenouvelable hydrotraitée comprend un produit hydrotraité d'huile de maïs, d'huile de maïs non comestible, d'huile de babassu, d'huile de carinata, d'huile de soja, d'huile de canola, d'huile de coco, d'huile de colza, d'huile de tall, d'acide gras d'huile de tall, d'huile de palme, de distillat d'acide gras d'huile de palme, d'huile de jatropha, d'huile de palmiste, d'huile de tournesol, d'huile de ricin, d'huile de cameline, d'huile d'archée, d'huile bactérienne, d'huile fongique, d'huile de protozoaire, d'huile d'algues, d'huile d'algues marines, d'huiles provenant d'halophiles, de graisses fondues, de suif non comestible, de suif comestible, de suif technique, de suif de flottation, de saindoux, de graisse de volaille, d'huiles de volaille, de graisse de poisson, d'huiles de poisson, d'huiles de friture, de graisse jaune, de graisse brune, d'huiles de légume usagées, de graisses de restaurant, de graisses de piège provenant de municipalités telles que d'installations de traitement des eaux, et d'huiles usées provenant d'opérations industrielles d'aliments emballés, ou d'un mélange de deux de ceux-ci ou plus.

**9.** Procédé d'une quelconque revendication précédente, dans lequel les paraffines du diesel paraffinique synthétique comprennent des paraffines en $C_{16}$ et $C_{18}$, ou dans lequel le diesel paraffinique synthétique présente :

une teneur en soufre inférieure à environ 5 ppm en poids,
moins d'environ 0,5 % en poids d'aromatiques,
moins d'environ 0,01 % en poids de benzène, ou
présente un point de trouble inférieur à environ -10 °C.

**10.** Procédé d'une quelconque revendication précédente, dans lequel des paraffines du diesel paraffinique synthétique comprennent des iso-paraffines et des n-paraffines, généralement dans lequel un rapport en poids des iso-paraffines aux n-paraffines est d'au moins environ 4:1.

**11.** Procédé d'une quelconque revendication précédente, dans lequel le biodiesel comprend un ester d'alkyle en $C_1$-$C_4$ d'acide gras produit à partir d'une graisse animale, d'une huile animale, d'une huile microbienne, d'une graisse végétale, d'une huile végétale, d'une graisse de légume, d'une huile de légume, d'une graisse, ou d'un mélange de deux de celles-ci ou plus, généralement dans lequel le biodiesel comprend un ester d'alkyle en $C_1$-$C_4$ d'acide gras produit à partir d'huile de maïs, d'huile de maïs non comestible, d'huile de babassu, d'huile de carinata, d'huile de soja, d'huile de canola, d'huile de coco, d'huile de colza, d'huile de tall, d'acide gras d'huile de tall, d'huile de palme, de distillat d'acide gras d'huile de palme, d'huile de jatropha, d'huile de palmiste, d'huile de tournesol, d'huile de ricin, d'huile de cameline, d'huile d'archée, d'huile bactérienne, d'huile fongique, d'huile de protozoaire, d'huile d'algues, d'huile d'algues marines, d'huiles provenant d'halophiles, de graisses fondues, de suif non comestible, de suif comestible, de suif technique, de suif de flottation, de saindoux, de graisse de volaille, d'huiles de volaille, de graisse de poisson, d'huiles de poisson, d'huiles de friture, de graisse jaune, de graisse brune, d'huiles de légume usagées, de graisses de restaurant, de graisses de piège provenant de municipalités telles que d'installations de traitement des eaux, et d'huiles usées provenant d'opérations industrielles d'aliments emballés, ou d'un mélange de deux de ceux-ci ou plus, ou, dans lequel le biodiesel comprend un ester méthylique d'acide gras, un ester éthylique d'acide gras, un ester propylique d'acide gras, un ester butylique d'acide gras, ou un mélange de deux de ceux-ci ou plus.

**12.** Procédé d'une quelconque revendication précédente, dans lequel le biodiesel comprend un biodiesel filtré à froid qui n'est pas distillé, ou un biodiesel distillé, généralement dans lequel le biodiesel comprend du biodiesel distillé et un biodiesel filtré à froid, et dans lequel un rapport volumique de biodiesel filtré à froid à du biodiesel distillé est d'environ 100:1 à environ 1:100.

**13.** Procédé d'une quelconque revendication précédente, dans lequel le biodiesel présente un score de procédure de test CSFBT modifiée d'environ 1,2 à 1,0, généralement dans lequel le biodiesel comprend un additif qui réduit un score de procédure de test CSFBT modifiée.

**14.** Procédé d'une quelconque revendication précédente, dans lequel le diesel pétrolier est un diesel de distillation directe hydrotraité, une huile de cycle léger de craqueur catalytique fluidisé (FCC) hydrotraitée, un gazole léger de cokéfaction hydrotraité, une huile de cycle lourd de FCC hydrocraquée, et des combinaisons de ceux-ci.

FIG. 1

FIG. 2

FIG. 3A

FIG. 3B

CO Emissions for Biodiesel/SPD Blends

FIG. 4

Relative Change in Elastomer Volume

FIG. 5

EP 3 585 862 B1

FIG. 6

FIG. 7

FIG. 8A

FIG. 8B

EP 3 585 862 B1

FIG. 9

FIG. 10A

FIG. 10B

CSFBT Scores for Biodiesel Blends - Biodiesel #3

FIG. 10C

EP 3 585 862 B1

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2017327757 A
- US 2009145392 A
- US 2005210739 A
- EP 3239277 A
- US 20160145536 A
- US 9109170 B
- US 8097049 B

### Non-patent literature cited in the description

- Neste Renewable Diesel Handbook. Neste Corp., May 2016